# EUROPEAN PATENT APPLICATION

(11) **EP 4 789 863 A1**
(43) Date of publication of application: **12.08.2026**
(21) Application number: 25156946.3
(22) Date of filing: 10.02.2025
(51) Int. Cl.: B32B 7/02, B32B 27/06, B32B 27/08, B32B 27/32, B65D 65/40

(54) **SHEET-LIKE COMPOSITE FOR DIMENSIONALLY STABLE FOOD OR DRINK PRODUCT CONTAINERS WITH REDUCED BASIS WEIGHT OF A PARTIAL SHEET-LIKE COMPOSITE**

(71) Applicant: SIG Services AG, 8212 Neuhausen am Rheinfall (CH)
(72) Inventor: Selke, Aline, 52441 Linnich (DE); Bischoff, Jörg, 52441 Linnich (DE); Schraeder, Luise, 52441 Linnich (DE)
(74) Representative: Herzog IP Patentanwalts GmbH

(57) **Abstract**

The invention pertains to a sheet-like composite (100), comprising a layer sequence which comprises:
a. a carrier layer (103),
b. a barrier layer (105), and
c. an inner polymer layer H (108);

wherein the barrier layer (105) comprises a sublayer sequence which comprises
- a barrier material layer (106), and
- a barrier substrate layer (107);

wherein an inner side of the barrier layer (105) faces towards the inner polymer layer H (108); wherein a partial sheet-like composite (109) consists of only the layers of the sheet-like composite (100) which are superimposed to the barrier layer (105) on its inner side; wherein a basis weight of the partial sheet-like (109) composite is less than 33 g/m². The invention further pertains to methods (300, 600, 700) for producing a sheet-like composite (100), a container precursor (400), and a closed container (500), respectively; to a container precursor (400); to a closed container (500); and to a use of the sheet-like composite (100).

## Description

### FIELD OF THE INVENTION

The present invention refers to a sheet-like composite, comprising a layer sequence which comprises the following layers, superimposed to one another, in the following order from an outer surface of the sheet-like composite to an inner surface of the sheet-like composite:
a. a carrier layer,
b. a barrier layer, and
c. an inner polymer layer H;
wherein the barrier layer comprises a sublayer sequence which comprises
- a barrier material layer, and
- a barrier substrate layer
as sublayers which are superimposed to one another; wherein an inner side of the barrier layer faces towards the inner polymer layer H; wherein a partial sheet-like composite consists of only the layers of the sheet-like composite which are superimposed to the barrier layer on its inner side; wherein a basis weight of the partial sheet-like composite is less than 33 g/m². The invention further pertains to methods for producing a sheet-like composite, a container precursor, and a closed container, respectively; to a container precursor; to a closed container; and to a use of the sheet-like composite.

### BACKGROUND

For some time, foodstuffs have been preserved, whether they be foodstuffs for human consumption or else animal feed products, by storing them either in a can or in a jar closed by a lid. In this case, shelf life can be increased firstly by separately and very substantially sterilising the foodstuff and the container in each case, here the jar or can, and then introducing the foodstuff into the container and closing the container. However, these measures of increasing the shelf life of foodstuffs, which have been tried and tested over a long period, have a series of disadvantages, for example the need for another sterilisation later on. Cans and jars, because of their essentially cylindrical shape, have the disadvantage that very dense and space-saving storage is not possible. Moreover, cans and jars have considerable intrinsic weight, which leads to increased energy expenditure in transport. Moreover, production of glass, tinplate or aluminium, even when the raw materials used for the purpose are recycled, necessitates quite a high expenditure of energy. In the case of jars, an aggravating factor is elevated expenditure on transport. The jars are usually prefabricated in a glass factory and then have to be transported to the facility where the foodstuff is dispensed with utilisation of considerable transport volumes. Furthermore, jars and cans can be opened only with considerable expenditure of force or with the aid of tools and hence in a rather laborious manner. In the case of cans, there is a high risk of injury emanating from sharp edges that arise on opening. In the case of jars, it is a repeated occurrence that broken glass gets into the foodstuff in the course of filling or opening of the filled jars, which can lead in the worst case to internal injuries on consumption of the foodstuff. In addition, both cans and jars have to be labelled for identification and promotion of the foodstuff contents. The jars and cans cannot be printed directly with information and promotional messages. In addition to the actual printing, a substrate is thus needed for the purpose, a paper or suitable film, as is a securing means, an adhesive or sealant.

Other packaging systems are known from the prior art, in order to store food and drink products over a long period with minimum impairment. These are containers produced from sheet-like composites - frequently also referred to as laminates. Sheet-like composites of this kind are frequently constructed from an outer polymer layer, a carrier layer usually consisting of cardboard or paper which imparts dimensional stability to the container, an adhesion promoter layer, a barrier layer and one or more inner polymer layers, as disclosed inter alia in WO 90/09926 A2. As the carrier layer imparts rigidity and dimensional stability to the container produced from the laminate, these laminate containers are to be seen in a line of development with the above-mentioned glasses and jars. In this, the above-mentioned laminate containers differ severely from pouches and bags produced from thinner foils without carrier layer. The dimensionally stable laminate containers already have many advantages over the conventional jars and cans. Nevertheless, there are opportunities for improvement in the case of these packaging systems too.

Experience has shown that the one or more inner polymer layer(s) must contain a minimum amount of polymer to enable for the manufacture of containers from the laminate which reliably maintain their liquid tightness even after mechanical stress as occurs during handling and transport of the containers. For decades, aluminium foil has been used as the standard barrier layer. Therefore, the minimum basis weight of the inner polymer layer(s) has been established using laminates with an aluminium foil. The main purpose of the aluminium foil is to provide barrier properties against oxygen and water-vapour. Liquid tightness is essentially provided by the inner polymer layer(s). Therefore, it has not been expected that the aluminium foil has a great effect on the liquid tightness, let alone a negative effect. More specifically, it has surprisingly been found that, if the aluminium foil is replaced by an alternative barrier layer, a so-called barrier film which includes a thin coating of a barrier material on a substrate, the minimum basis weight of the inner polymer layer(s) required to obtain containers which reliably maintain good liquid tightness and good oxygen barrier properties under mechanical stress is reduced.

### OBJECTS

In general, it is an object of the present invention to at least partly overcome a disadvantage arising from the prior art.

It is a further object of the invention to provide dimensionally stable food or drink product containers with reduced empty weight and, at the same time, little or no impairment of their liquid tightness and oxygen barrier properties under mechanical stress.

A further object of the invention is to provide a packaging laminate, which can be produced with reduced polymer consumption, for the manufacture of dimensionally stable food or drink product containers with little or no impairment of their liquid tightness and oxygen barrier properties under mechanical stress.

### DETAILED DESCRIPTION OF THE INVENTION

A contribution to at least partly fulfilling at least one, preferably more than one, of the above-mentioned objects is made by any of the embodiments of the invention.

A 1^{st} embodiment of the invention is a sheet-like composite, comprising a layer sequence which comprises the following layers, superimposed to one another, in the following order from an outer surface of the sheet-like composite to an inner surface of the sheet-like composite:
a. a carrier layer,
b. a barrier layer, and
c. an inner polymer layer H;
wherein the barrier layer comprises a sublayer sequence which comprises
- a barrier material layer, and
- a barrier substrate layer
as sublayers which are superimposed to one another; wherein an inner side of the barrier layer faces towards the inner polymer layer H; wherein a partial sheet-like composite consists of only the layers of the sheet-like composite which are superimposed to the barrier layer on its inner side; wherein a basis weight of the partial sheet-like composite is less than 33 g/m², preferably less than 32 g/m², more preferably less than 31 g/m², more preferably less than 30 g/m², more preferably less than 29 g/m², more preferably less than 28 g/m², more preferably less than 27 g/m², more preferably less than 26 g/m², more preferably less than 25 g/m², more preferably less than 24 g/m², more preferably less than 23 g/m², more preferably less than 22 g/m², more preferably less than 21 g/m², most preferably not more than 20 g/m².

Preferably, the basis weight of the partial sheet-like composite is in a range from 7 to less than 33 g/m², more preferably from 8 to less than 32 g/m², more preferably from 9 to less than 31 g/m², more preferably from 10 to less than 30 g/m², more preferably from 11 to less than 29 g/m², more preferably from 12 to less than 28 g/m², more preferably from 13 to less than 27 g/m², more preferably from 14 to less than 26 g/m², more preferably from 15 to less than 25 g/m², more preferably from 16 to less than 24 g/m², more preferably from 17 to less than 23 g/m², more preferably from 18 to less than 22 g/m², more preferably from 19 to less than 21 g/m².

In a preferred embodiment of the sheet-like composite, the inner polymer layer H comprises, preferably consists of, a blend of a LDPE and a mPE. This preferred embodiment is a 2^{nd} embodiment of the invention, that preferably depends on the 1^{st} embodiment of the invention.

In a preferred embodiment of the sheet-like composite, the inner polymer layer H comprises its LDPE in a proportion in a range from 50 to 90 wt.-%, preferably from 60 to 80 wt.-%, most preferably from 65 to 75 wt.-%, based in each case on the weight of the inner polymer layer H. This preferred embodiment is a 3^{rd} embodiment of the invention, that preferably depends on the 2^{nd} embodiment of the invention.

In a preferred embodiment of the sheet-like composite, the inner polymer layer H comprises its mPE in a proportion in a range from 10 to 50 wt.-%, preferably from 20 to 40 wt.-%, most preferably from 25 to 35 wt.-%, based in each case on the weight of the inner polymer layer H. This preferred embodiment is a 4^{th} embodiment of the invention, that preferably depends on the 2^{nd} or 3^{rd} embodiment of the invention.

In a preferred embodiment of the sheet-like composite, the layer sequence further comprises an inner polymer layer F which is disposed between the barrier layer and the inner polymer layer H, wherein the inner polymer layer F comprises a mPE. This preferred embodiment is a 5^{th} embodiment of the invention, that preferably depends on any of the preceding embodiments of the invention.

In a preferred embodiment of the sheet-like composite, the inner polymer layer H comprises its mPE in a first proportion based on the weight of the inner polymer layer H, wherein the inner polymer layer F comprises its mPE in a further proportion based on the weight of the inner polymer layer F, wherein the first proportion is different from, preferably less than, the further proportion. This preferred embodiment is a 6^{th} embodiment of the invention, that preferably depends on the 5^{th} embodiment of the invention.

In a preferred embodiment of the sheet-like composite, the inner polymer layer F comprises its mPE in a proportion of more than 50 wt.-% and up to 100 wt.-%, preferably in a range from 60 to 95 wt.-%, preferably from 70 to 90 wt.-%, most preferably from 75 to 85 wt.-%, based in each case on the weight of the inner polymer layer F. This preferred embodiment is a 7^{th} embodiment of the invention, that preferably depends on the 5^{th} or 6^{th} embodiment of the invention.

In a preferred embodiment of the sheet-like composite, the inner polymer layer F comprises, preferably consists of, a blend of a LDPE and its mPE. This preferred embodiment is an 8^{th} embodiment of the invention, that preferably depends on any of the 5^{th} to 7^{th} embodiments of the invention.

In a preferred embodiment of the sheet-like composite, the inner polymer layer F comprises its LDPE in a proportion in a range from 0 to less than 50 wt.-%, preferably from 5 to 40 wt.-%, preferably from 10 to 30 wt.-%, most preferably from 15 to 25 wt.-%, based in each case on the weight of the inner polymer layer F. This preferred embodiment is a 9^{th} embodiment of the invention, that preferably depends on the 8^{th} embodiment of the invention.

In a preferred embodiment of the sheet-like composite, the first proportion is not more than 50 wt.-%, preferably not more than 45 wt.-%, more preferably not more than 40 wt.-%, even more preferably not more than 35 wt.-%, most preferably not more than 30 wt.-%, wherein the further proportion is more than 50 wt.-%, preferably more than 55 wt.-%, more preferably more than 60 wt.-%, more preferably more than 65 wt.-%, even more preferably more than 70 wt.-%, most preferably more than 75 wt.-%. This preferred embodiment is a 10^{th} embodiment of the invention, that preferably depends on any of the 6^{th} to 9^{th} embodiments of the invention.

In a preferred embodiment of the sheet-like composite, the layer sequence further comprises an inner polymer layer G which is disposed between the barrier layer and the inner polymer layer H, preferably between the inner polymer layer F and the inner polymer layer H. This preferred embodiment is an 11^{th} embodiment of the invention, that preferably depends on any of the preceding embodiments of the invention.

In a preferred embodiment of the sheet-like composite, the inner polymer layer G comprises a polyolefin, preferably a polyethylene, more preferably a LDPE, in a proportion of at least 50 wt.-%, preferably at least 60 wt.-%, more preferably at least 70 wt.-%, more preferably at least 80 wt.-%, more preferably at least 90 wt.-%, even more preferably at least 95 wt.-%, most preferably 100 wt.-%, based in each case on the weight of the inner polymer layer G. This preferred embodiment is a 12^{th} embodiment of the invention, that preferably depends on the 11^{th} embodiment of the invention.

In a preferred embodiment of the sheet-like composite, the barrier substrate layer comprises a polymer in a proportion of at least 50 wt.-%, preferably at least 60 wt.-%, more preferably at least 70 wt.-%, more preferably at least 80 wt.-%, even more preferably at least 90 wt.-%, most preferably 100 wt.-%, based in each case on the weight of the barrier substrate layer. This preferred embodiment is a 13^{th} embodiment of the invention, that preferably depends on any of the preceding embodiments of the invention.

Preferably, the polymer of the barrier substrate layer has been stretched, more preferably monoaxially stretched or biaxially stretched.

In a preferred embodiment of the sheet-like composite, the polymer of the barrier substrate layer is selected from the group consisting of a polycondensate, a polyolefin, a polyvinyl alcohol, or a combination of at least two thereof, where a polyolefin is particularly preferred. This preferred embodiment is a 14^{th} embodiment of the invention, that preferably depends on the 13^{th} embodiment of the invention.

A preferred polyolefin is a polyethylene, or a polypropylene, or both. A preferred polypropylene has been stretched, more particularly monoaxially stretched (oPP) or biaxially stretched (BoPP). A preferred polycondensate is a polyester or polyamide (PA) or both. A preferred polyester is one selected from the group consisting of a polyethylene terephthalate (PET), a polylactide (PLA), or a combination of at least two thereof. A preferred polyvinyl alcohol is a vinyl alcohol copolymer. A preferred vinyl alcohol copolymer is an ethylene-vinyl alcohol copolymer.

In a preferred embodiment of the sheet-like composite, the barrier material layer comprises a barrier material in a proportion of at least 50 wt.-% , preferably at least 60 wt.-%, more preferably at least 70 wt.-%, more preferably at least 80 wt.-%, even more preferably at least 90 wt.-%, most preferably 100 wt.-%, based in each case on the weight of the barrier material layer, wherein the barrier material:
- provides a barrier action, and
- is selected from the group consisting of an oxide, a metal, a silicon-containing compound and a polymer, or a combination of at least two of these.

This preferred embodiment is a 15^{th} embodiment of the invention, that preferably depends on any of the preceding embodiments of the invention.

A preferred barrier action is a barrier action against the transmission of oxygen or water vapour or both.

A preferred oxide is an oxide of one selected from the group consisting of one or more metals, one or more semi-metals and one or more non-metals, or a combination of at least two thereof, such as of Al₂O₃ and SiO₂, for example. A preferred oxide of a metal is one selected from the group consisting of an aluminium oxide, for example Al₂O₃; a magnesium oxide, for example MgO; a titanium oxide, for example TiO₂; a tin oxide, for example an indium tin oxide (ITO), Zn₂SnO₄, SnO, Sn₂O₃ and SnO₂; a zinc oxide, for example ZnO; and an indium oxide, for example an indium tin oxide (ITO), InO, In₂O₃ and InO₂; or a combination of at least two thereof. A preferred oxide of a semi-metal is a silicon oxide, for example SiO₂. A preferred metal is aluminium. A preferred silicon-containing compound is a silicon nitride, for example Si₃N₄, or an organosilicon compound. A preferred organosilicon compound is a siloxane. A polymer preferred as barrier material is a vinyl polymer or a polyacrylic acid or both. A preferred vinyl polymer is a polyvinylidene chloride (PVDC) or a polyvinyl alcohol (PVOH) or both.

In a preferred embodiment of the sheet-like composite, the barrier material layer has an average thickness in a range from 1 nm to 1 µm, preferably from 1 to 500 nm, more preferably from 1 to 300 nm, more preferably from 1 to 100 nm, more preferably from 1 to 90 nm, more preferably from 1 to 80 nm, more preferably from 1 to 70 nm, more preferably from 1 to 60 nm, more preferably from 1 to 50 nm, more preferably from 1 to 40 nm, more preferably from 1 to 30 nm, even more preferably from 1 to 20 nm, most preferably from 5 to 20 nm. This preferred embodiment is a 16^{th} embodiment of the invention, that preferably depends on any of the preceding embodiments of the invention.

In a preferred embodiment of the sheet-like composite, the barrier material layer is superimposed to the barrier substrate layer on a side of the barrier substrate layer which faces the outer surface of the sheet-like composite. This preferred embodiment is a 17^{th} embodiment of the invention, that preferably depends on any of the preceding embodiments of the invention.

In a preferred embodiment of the sheet-like composite, the barrier substrate layer has an average thickness within a range from 2 to 100 µm, preferably from 3 to 50 µm, preferably from 3 to 30 µm, more preferably from 4 to 25 µm, more preferably from 5 to 20 µm, most preferably from 10 to 20 µm. This preferred embodiment is an 18^{th} embodiment of the invention, that preferably depends on any of the preceding embodiments of the invention.

In a preferred embodiment of the sheet-like composite, the barrier layer has
A. an oxygen transmission rate in a range from 0.02 to 40 cm³ oxygen/(m² · day · atm), preferably from 0.03 to 20 cm³ oxygen /(m² · day · atm), more preferably from 0.03 to 10 cm³ oxygen /(m² · day · atm), more preferably from 0.03 to 5 cm³ oxygen /(m² · day · atm), more preferably from 0.03 to 3 cm³ oxygen /(m² · day · atm), more preferably from 0.035 to 2 cm³ oxygen /(m² · day · atm), more preferably from 0.1 to 1 cm³ oxygen /(m² · day · atm), more preferably from 0.2 to 0.9 cm³ oxygen /(m² · day · atm), even more preferably from 0.3 to 0.9 cm³ oxygen /(m² · day · atm), most preferably from 0.4 to 0.8 cm³ oxygen /(m² · day · atm);
B. a water vapour transmission rate in a range from 0.01 to 40 g H₂O/(m² · day), preferably from 0.01 to 20 g H₂O /(m² · day), more preferably from 0.01 to 10 g H₂O /(m² · day), more preferably from 0.01 to 5 g H₂O /(m² · day), more preferably from 0.01 to 3 g H₂O /(m² · day), more preferably from 0.01 to 2 g H₂O /(m² · day), more preferably from 0.01 to 1 g H₂O /(m² · day), more preferably from 0.01 to 0.9 g H₂O /(m² · day), more preferably from 0.01 to 0.8 g H₂O /(m² · day), more preferably from 0.01 to 0.7 g H₂O /(m² · day), more preferably from 0.01 to 0.6 g H₂O /(m² · day), more preferably from 0.01 to 0.5 g H₂O /(m² · day), more preferably from 0.01 to 0.4 g H₂O /(m² · day), more preferably from 0.01 to 0.3 g H₂O /(m² · day), even more preferably from 0.01 to 0.2 g H₂O /(m² · day), most preferably from 0.05 to 0.2 g H₂O /(m² · day); or
C. both.

This preferred embodiment is a 19^{th} embodiment of the invention, that preferably depends on any of the preceding embodiments of the invention.

In a preferred embodiment of the sheet-like composite, the inner polymer layer F comprises no polymer with functional groups in a proportion of more than 10 wt.-%, preferably of more than 5 wt.-%, more preferably of more than 3 wt.-%, more preferably of more than 2 wt.-%, even more preferably of more than 1 wt.-%, in each case based on the weight of the inner polymer layer F. This preferred embodiment is a 20^{th} embodiment of the invention, that preferably depends on any of the 5^{th} to 19^{th} embodiments of the invention.

Most preferably, the inner polymer layer F is essentially free from any polymer with functional groups. In this context, preferred functional groups are of the general formula OR or COOR, wherein in each case R is independently selected from the group consisting of H, C₁- to C₂₂-alkyl, and an aromatic moity, or a combination of two or more thereof. In a further preferred embodiment, the inner polymer layer F comprises no adhesion promoter polymer in a proportion of more than 10 wt.-%, preferably of more than 5 wt.-%, more preferably of more than 3 wt.-%, more preferably of more than 2 wt.-%, even more preferably of more than 1 wt.-%, in each case based on the weight of the inner polymer layer F. Most preferably, the inner polymer layer F is essentially free from any adhesion promoter polymer.

In a preferred embodiment of the sheet-like composite, the layer sequence further comprises a polymer layer D which is disposed between the carrier layer and the barrier layer. This preferred embodiment is a 21^{st} embodiment of the invention, that preferably depends on any of the preceding embodiments of the invention.

In a preferred embodiment of the sheet-like composite, the polymer layer D comprises an adhesion-promoter polymer in a proportion of at least 50 wt.-%, preferably of at least 60 wt.-%, more preferably of at least 70 wt.-%, more preferably of at least 80 wt.-%, even more preferably of at least 90 wt.-%, most preferably of 100 wt.-%, based in each case on the weight of the polymer layer D. This preferred embodiment is a 22^{nd} embodiment of the invention, that preferably depends on the 21^{st} embodiment of the invention.

In a preferred embodiment of the sheet-like composite, the layer sequence further comprises a polymer layer C which is disposed between the carrier layer and the barrier layer. This preferred embodiment is a 23^{rd} embodiment of the invention, that preferably depends on any of the preceding embodiments of the invention.

In a preferred embodiment of the sheet-like composite, the polymer layer C comprises a polyolefin. This preferred embodiment is a 24^{th} embodiment of the invention, that preferably depends on the 23^{rd} embodiment of the invention.

In a preferred embodiment of the sheet-like composite, the polymer layer C comprises a HDPE or a LDPE or both. This preferred embodiment is a 25^{th} embodiment of the invention, that preferably depends on the 23^{rd} or 24^{th} embodiment of the invention.

In a preferred embodiment of the sheet-like composite, the polymer layer C comprises:
- the HDPE in a proportion in a range from 10 to 70 wt.-%, preferably from 20 to 60 wt.-%, more preferably from 30 to 50 wt.-%, most preferably from 35 to 45 wt.-%, based in each case on the weight of the polymer layer C; or
- the LDPE in a proportion in a range from 30 to 90 wt.-%, preferably from 40 to 80 wt.-%, more preferably from 50 to 70 wt.-%, most preferably from 55 to 65 wt.-%, based in each case on the weight of the polymer layer C; or
- both.

This preferred embodiment is a 26^{th} embodiment of the invention, that preferably depends on the 25^{th} embodiment of the invention.

In a preferred embodiment of the sheet-like composite, the polymer layer C is disposed between the carrier layer and the polymer layer D. This preferred embodiment is a 27^{th} embodiment of the invention, that preferably depends on the 25^{th} or 26^{th} embodiment of the invention.

In a preferred embodiment of the sheet-like composite, the layer sequence further comprises a polymer layer A which is superimposed to the carrier layer on a side of the carrier layer which faces the outer surface of the sheet-like composite. This preferred embodiment is a 28^{th} embodiment of the invention, that preferably depends on any of the preceding embodiments of the invention.

In a preferred embodiment of the sheet-like composite, the polymer layer A comprises a polyolefin in a proportion of at least 50 wt.-%, preferably of at least 60 wt.-%, more preferably of at least 70 wt.-%, more preferably of at least 80 wt.-%, even more preferably of at least 90 wt.-%, most preferably of 100 wt.-%, based in each case on the weight of the polymer layer A. This preferred embodiment is a 29^{th} embodiment of the invention, that preferably depends on the 28^{th} embodiment of the invention.

In a preferred embodiment of the sheet-like composite, the LDPE of the inner polymer layer H has a melt flow index in the range from 5 to 9 g/10 min, preferably from 6 to 8 g/10 min, more preferably from 6.5 to 7.5 g/10 min. This preferred embodiment is a 30^{th} embodiment of the invention, that preferably depends on any of the 2^{nd} to 29^{th} embodiments of the invention.

In a preferred embodiment of the sheet-like composite, the LDPE of the inner polymer layer F, preferably of the second polymer blend, has a melt flow index in the range from 5 to 9 g/10 min, preferably from 6 to 8 g/10 min, more preferably from 6.5 to 7.5 g/10 min. This preferred embodiment is a 31^{st} embodiment of the invention, that preferably depends on any of the 8^{th} to 30^{th} embodiments of the invention.

In a preferred embodiment of the sheet-like composite, the LDPE of the inner polymer layer G has a melt flow index in the range from 5 to 9 g/10 min, preferably from 6 to 8 g/10 min, more preferably from 6.5 to 7.5 g/10 min. This preferred embodiment is a 32^{nd} embodiment of the invention, that preferably depends on any of the 12^{th} to 31^{st} embodiments of the invention.

In a preferred embodiment of the sheet-like composite, the LDPE of the polymer layer A has a melt flow index in the range from 2 to 6 g/10 min, preferably from 3 to 5 g/10 min, more preferably from 3.5 to 4.5 g/10 min. This preferred embodiment is a 33^{rd} embodiment of the invention, that preferably depends on any of the 28^{th} to 32^{nd} embodiments of the invention.

In a preferred embodiment of the sheet-like composite, the LDPE of the polymer layer C has a melt flow index in the range from 2 to 6 g/10 min, preferably from 3 to 5 g/10 min, more preferably from 3.5 to 4.5 g/10 min. This preferred embodiment is a 34^{th} embodiment of the invention, that preferably depends on any of the 25^{th} to 33^{rd} embodiments of the invention.

In a preferred embodiment of the sheet-like composite, the sheet-like composite further comprises a colour application which is superimposed to the carrier layer on a side of the carrier layer which faces away from the barrier layer. This preferred embodiment is a 35^{th} embodiment of the invention, that preferably depends on any of the preceding embodiments of the invention.

In a preferred embodiment of the sheet-like composite, the carrier layer comprises, preferably consists of, one selected from the group consisting of cardboard, paperboard and paper, or a combination of at least two of these. This preferred embodiment is a 36^{th} embodiment of the invention, that preferably depends on any of the preceding embodiments of the invention.

In a preferred embodiment of the sheet-like composite, the barrier layer is characterised by an aluminium content of less than 50 wt.-%, preferably of less than 40 wt.-%, more preferably of less than 30 wt.-%, more preferably of less than 20 wt.-%, more preferably of less than 10 wt.-%, more preferably of less than 5 wt.-%, more preferably of less than 4 wt.-%, more preferably of less than 3 wt.-%, more preferably of less than 2 wt.-%, even more preferably of less than 1 wt.-%, most preferably of less than 0.5 wt.-%, based in each case on the weight of the barrier layer. This preferred embodiment is a 37^{th} embodiment of the invention, that preferably depends on any of the preceding embodiments of the invention.

Herein, *"aluminium"* refers to the chemical element aluminium, i.e., the metal, not as part of a chemical compound, such as an aluminium oxide. A preferred barrier layer is essentially free of aluminium.

In a preferred embodiment of the sheet-like composite, the barrier layer is characterised by a metal content of less than 50 wt.-%, preferably of less than 40 wt.-%, more preferably of less than 30 wt.-%, more preferably of less than 20 wt.-%, more preferably of less than 10 wt.-%, more preferably of less than 5 wt.-%, more preferably of less than 4 wt.-%, more preferably of less than 3 wt.-%, more preferably of less than 2 wt.-%, even more preferably of less than 1 wt.-%, most preferably of less than 0.5 wt.-%, based in each case on the weight of the barrier layer. This preferred embodiment is a 38^{th} embodiment of the invention, that preferably depends on any of the preceding embodiments of the invention.

Herein, *"metal"* refers to all metals, in each case as chemical element, not as part of a chemical compound, such as an oxide. A preferred barrier layer is essentially free of any metal.

In a preferred embodiment of the sheet-like composite, the sheet-like composite is characterised by an aluminium content of less than 10 wt.-%, more preferably of less than 8 wt.-%, more preferably of less than 5 wt.-%, more preferably of less than 4 wt.-%, more preferably of less than 3 wt.-%, more preferably of less than 2 wt.-%, even more preferably of less than 1 wt.-%, most preferably of less than 0.5 wt.-%, based in each case on the weight of the sheet-like composite. This preferred embodiment is a 39^{th} embodiment of the invention, that preferably depends on any of the preceding embodiments of the invention.

A preferred sheet-like composite is essentially free of aluminium.

In a preferred embodiment of the sheet-like composite, the sheet-like composite is characterised by a metal content of less than 10 wt.-%, more preferably of less than 8 wt.-%, more preferably of less than 5 wt.-%, more preferably of less than 4 wt.-%, more preferably of less than 3 wt.-%, more preferably of less than 2 wt.-%, even more preferably of less than 1 wt.-%, most preferably of less than 0.5 wt.-%, based in each case on the weight of the sheet-like composite. This preferred embodiment is a 40^{th} embodiment of the invention, that preferably depends on any of the preceding embodiments of the invention.

A preferred sheet-like composite is essentially free of any metal.

In a preferred embodiment of the sheet-like composite, the sheet-like composite includes a straight crease line with a groove on the outer surface. This preferred embodiment is a 41^{st} embodiment of the invention, that preferably depends on any of the preceding embodiments of the invention.

A preferred straight crease line has a length of at least 1 cm, preferably of at least 2 cm, more preferably of at least 10 cm. A particularly preferred straight crease line extends essentially from a first cut edge of the sheet-like composite to a further cut edge, preferably opposite the first cut edge, of the sheet-like composite. Preferred first and further cut edges of the sheet-like composite are transversal cut edges of a blank. A crease line for folding the sheet-like composite to obtain a longitudinal fold edge of a container is referred to as longitudinal crease line. In the case of a blank, the longitudinal crease lines often extend from a first transversal cut edge of the blank to a further transversal cut edge of the blank opposite the first transversal cut edge.

In a preferred embodiment of the sheet-like composite, the layer sequence further comprises a further polymer layer, wherein the further polymer layer is disposed between the barrier substrate layer and the barrier material layer. This preferred embodiment is a 42^{nd} embodiment of the invention, that preferably depends on any of the preceding embodiments of the invention.

In a preferred embodiment of the sheet-like composite, the sheet-like composite is a blank for production of a single closed container. This preferred embodiment is a 43^{rd} embodiment of the invention, that preferably depends on any of the preceding embodiments of the invention.

In a preferred embodiment of the sheet-like composite, the carrier layer has a through-hole which is covered by the barrier layer as a first hole-covering layer. This preferred embodiment is a 44^{th} embodiment of the invention, that preferably depends on any of the preceding embodiments of the invention.

In a preferred embodiment of the sheet-like composite, the through-hole is, in addition, covered by one selected from the group consisting of the polymer layer A, the polymer layer C, the polymer layer D, the polymer layer F, the polymer layer G, and the polymer layer H, or by a combination of two or more, preferably all, thereof as further hole-covering layer(s). This preferred embodiment is a 45^{th} embodiment of the invention, that preferably depends on the 44^{th} embodiment of the invention.

In a preferred embodiment of the sheet-like composite, the first hole-covering layer and at least one further hole-covering layer, preferably all further hole-covering layers, are joined to one another in the through-hole, preferably to an extent of at least 30 %, more preferably at least 70 % and most preferably at least 90 %, in each case of the area formed by the through-hole. This preferred embodiment is a 46^{th} embodiment of the invention, that preferably depends on the 45^{th} embodiment of the invention.

In a preferred embodiment of the sheet-like composite, the through-hole extends a first length in a first carrier layer direction within a carrier layer plane of the carrier layer; wherein the through-hole extends a further length in a further carrier layer direction within the carrier layer plane; wherein
A. the first length is in the range from 1 to 40 mm, preferably from 2 to 35 mm, more preferably from 3 to 30 mm; or
B. the further length is in the range from 1 to 40 mm, preferably from 2 to 35 mm, more preferably from 3 to 30 mm; or
C. both.

This preferred embodiment is a 47^{th} embodiment of the invention, that preferably depends on any of the 44^{th} to 46^{th} embodiments of the invention.

In a further preferred embodiment of the sheet-like composite, the first length is in a range from 2 to 20 mm, preferably from 3 to 15 mm, more preferably from 3 to 10 mm, even more preferably from 3 to 8 mm. This preferred embodiment is a 48^{th} embodiment of the invention, that preferably depends on the 47^{th} embodiment of the invention.

Additionally or alternatively preferred, the further length is in a range from 2 to 20 mm, preferably from 3 to 15 mm, more preferably from 3 to 10 mm, even more preferably from 3 to 8 mm. Preferably, the first length and the further length have the same value.

A 49^{th} embodiment of the invention is a method 1 for producing a sheet-like composite, the method comprising as method steps:
a) providing a carrier layer and a barrier layer;
b) superimposing the barrier layer to a first side of the carrier layer; and
c) superimposing a polymer composition H to the barrier layer on a side of the barrier layer which faces away from the carrier layer, thereby obtaining an inner polymer layer H from the polymer composition H;
wherein the barrier layer comprises a sublayer sequence which comprises
- a barrier material layer, and
- a barrier substrate layer
as sublayers which are superimposed to one another; wherein in the sheet-like composite an inner side of the barrier layer faces towards the inner polymer layer H; wherein a partial sheet-like composite consists of only the layers of the sheet-like composite which are superimposed to the barrier layer on its inner side; wherein a basis weight of the partial sheet-like composite is less than 33 g/m², preferably less than 32 g/m², more preferably less than 31 g/m², more preferably less than 30 g/m², more preferably less than 29 g/m², more preferably less than 28 g/m², more preferably less than 27 g/m², more preferably less than 26 g/m², more preferably less than 25 g/m², more preferably less than 24 g/m², more preferably less than 23 g/m², more preferably less than 22 g/m², more preferably less than 21 g/m², most preferably not more than 20 g/m².

Preferably, the basis weight of the partial sheet-like composite is in a range from 7 to less than 33 g/m², more preferably from 8 to less than 32 g/m², more preferably from 9 to less than 31 g/m², more preferably from 10 to less than 30 g/m², more preferably from 11 to less than 29 g/m², more preferably from 12 to less than 28 g/m², more preferably from 13 to less than 27 g/m², more preferably from 14 to less than 26 g/m², more preferably from 15 to less than 25 g/m², more preferably from 16 to less than 24 g/m², more preferably from 17 to less than 23 g/m², more preferably from 18 to less than 22 g/m², more preferably from 19 to less than 21 g/m².

Preferably, the method 1 is a method for producing the sheet-like composite of the invention according to any of its embodiments. Preferably the method is a method of producing a sheet-like composite, preferably the sheet-like composite of the invention according to any of its embodiments. Preferably, one selected from the group consisting of the carrier layer, the barrier material layer, the barrier substrate layer, the barrier layer, and the inner polymer layer H, or a combination of at least two thereof is designed or arranged or both according to one of the embodiments of the sheet-like composite according to the invention. It is further preferred that the barrier layer is designed or arranged or both as the barrier layer of the sheet-like composite of the invention according to any of its embodiments described herein. Preferably, the method step c) includes melt extruding the polymer composition H. The superimposing in method step b) is accomplished preferably in the form of laminating.

In a preferred embodiment of the method 1, in the method step c) the polymer composition H is superimposed to the barrier layer at a basis weight in the range from 5 to 15 g/m², preferably from 6 to 14 g/m², more preferably from 7 to 13 g/m², even more preferably from 8 to 12 g/m², most preferably from 9 to 11 g/m². This preferred embodiment is a 50^{th} embodiment of the invention, that preferably depends on the 49^{th} embodiment of the invention.

In a preferred embodiment of the method 1, in the sheet-like composite the barrier substrate layer faces away from the carrier layer, relative to the barrier material layer. This preferred embodiment is a 51^{st} embodiment of the invention, that preferably depends on any of the 49^{th} or 50^{th} embodiment of the invention.

In a preferred embodiment of the method 1, in the method step a) the barrier layer is provided as a prefabricated barrier film. This preferred embodiment is a 52^{nd} embodiment of the invention, that preferably depends on any of the 49^{th} to 51^{st} embodiments of the invention.

In a preferred embodiment of the method 1, before the method step b) a through-hole is created in the carrier layer; wherein in the method step b) the through-hole is covered by the barrier layer as a first hole-covering layer. This preferred embodiment is a 53^{rd} embodiment of the invention, that preferably depends on any of the 49^{th} to 52^{nd} embodiments of the invention.

Preferably, the through-hole is created mechanically, more preferably by punching, or by laser.

In a preferred embodiment of the method 1, in the method step b) the barrier layer is laminated to the carrier layer with a polymer composition C or a polymer composition D or both as laminating agent(s), thereby obtaining a polymer layer C from the polymer composition C, or a polymer layer D from the polymer composition D, or both. This preferred embodiment is a 54^{th} embodiment of the invention, that preferably depends on any of the 49^{th} to 53^{rd} embodiments of the invention.

Preferably, the polymer layer C, or the polymer layer D or both is/are designed or arranged or both according to one of the embodiments of the sheet-like composite according to the invention. Preferably, the method step b) includes melt extruding the polymer composition C or the polymer composition D or both. Preferably, the polymer composition C and the polymer composition D are co-extruded, preferably to the carrier layer.

In a preferred embodiment of the method 1, in the method step b) the through-hole is covered by the polymer layer C as a further hole-covering layer, or by the polymer layer D as a further hole-covering layer, or by both. This preferred embodiment is a 55^{th} embodiment of the invention, that preferably depends on the 53^{rd} or 54^{th} embodiment of the invention.

In a preferred embodiment of the method 1, the method step c) further comprises superimposing a polymer composition F to the barrier layer on the side of the barrier layer which faces away from the carrier layer such that an inner polymer layer F, which is obtained from the polymer composition F, is disposed between the barrier layer and the inner polymer layer H. This preferred embodiment is a 56^{th} embodiment of the invention, that preferably depends on any of the 49^{th} to 55^{th} embodiments of the invention.

Preferably, the inner polymer layer F is designed or arranged or both according to one of the embodiments of the sheet-like composite according to the invention. Preferably, in the method step c) the through-hole is covered by the inner polymer layer F as a further hole-covering layer. Additionally, in the method step c) the inner polymer layer F is preferably joined to one selected from the group consisting of the polymer layer A, the polymer layer C, the polymer layer D, the barrier layer, the inner polymer layer G, and the inner polymer layer H, or to each of a combination of at least two thereof in the through-hole, preferably to an extent of at least 30 %, more preferably at least 70 % and most preferably at least 90 %, in each case of the area formed by the through-hole. Preferably, in the method step c) the polymer composition F is coated directly onto the barrier layer. Additionally or alternatively preferred, superimposing the polymer composition F to the barrier layer in the method step c) includes melt extrusion coating the polymer composition F, preferably by coextruding at least the polymer composition F and the polymer composition H, more preferably by coextruding at least the polymer composition F, the polymer composition G and the polymer composition H.

In a preferred embodiment of the method 1, in the method step c) the polymer composition F is superimposed to the barrier layer at a basis weight in the range from 1 to 8 g/m², preferably from 1 to 7 g/m², more preferably from 1 to 6 g/m², even more preferably from 1 to 5 g/m², most preferably from 2 to 4 g/m². This preferred embodiment is a 57^{th} embodiment of the invention, that preferably depends on the 56^{th} embodiment of the invention.

In a preferred embodiment of the method 1, the method step c) further comprises superimposing a polymer composition G to the barrier layer on the side of the barrier layer which faces away from the carrier layer such that an inner polymer layer G, which is obtained from the polymer composition G, is disposed between the barrier layer and the inner polymer layer H. This preferred embodiment is a 58^{th} embodiment of the invention, that preferably depends on any of the 49^{th} to 57^{th} embodiments of the invention.

Preferably, the inner polymer layer G is designed or arranged or both according to one of the embodiments of the sheet-like composite according to the invention. Preferably, the inner polymer layer G is disposed between the inner polymer layer F and the inner polymer layer H. Preferably, in the method step c) the through-hole is covered by the inner polymer layer G as a further hole-covering layer. In the method step c) the inner polymer layer G is preferably joined to one selected from the group consisting of the polymer layer A, the polymer layer C, the polymer layer D, the barrier layer, the inner polymer layer F, and the inner polymer layer H, or to each of a combination of at least two thereof in the through-hole, preferably to an extent of at least 30 %, more preferably at least 70 % and most preferably at least 90 %, in each case of the area formed by the through-hole. Preferably, superimposing the polymer composition G to the barrier layer in the method step c) includes melt extrusion coating the polymer composition G, preferably by coextruding at least the polymer composition G and the polymer composition H, more preferably by coextruding at least the polymer composition F, the polymer composition G and the polymer composition H.

In a preferred embodiment of the method 1, in the method step c) the polymer composition G is superimposed to the barrier layer at a basis weight in the range from 2 to 12 g/m², preferably from 3 to 11 g/m², more preferably from 4 to 10 g/m², even more preferably from 5 to 9 g/m², most preferably from 6 to 8 g/m². This preferred embodiment is a 59^{th} embodiment of the invention, that preferably depends on the 58^{th} embodiment of the invention.

In a preferred embodiment of the method 1, the method comprises a further step of superimposing a polymer composition A to a further side of the carrier layer which is opposite to the first side, thereby obtaining a polymer layer A from the polymer composition A. This preferred embodiment is a 60^{th} embodiment of the invention, that preferably depends on any of the 49^{th} to 59^{th} embodiments of the invention.

Preferably, the further step is conducted after the method step a), or prior to the method step b), or both. Particularly preferably, the further step is conducted between the method steps a) and b). Preferably, the polymer layer A is designed or arranged or both according to one of the embodiments of the sheet-like composite according to the invention.

In a preferred embodiment of the method 1, in the further step the through-hole is covered by the polymer layer A as a further hole-covering layer. This preferred embodiment is a 61^{st} embodiment of the invention, that preferably depends on the 66^{th} embodiment of the invention.

Additionally, in the further step the polymer layer A is preferably joined to one selected from the group consisting of the polymer layer C, the polymer layer D, the barrier layer, the inner polymer layer F, the inner polymer layer G, and the inner polymer layer H, or to each of a combination of at least two thereof in the through-hole, preferably to an extent of at least 30 %, more preferably at least 70 % and most preferably at least 90 %, in each case of the area formed by the through-hole.

In a preferred embodiment of the method 1, the method comprises an additional step of superimposing a colour application to the carrier layer on a further side of the carrier layer which is opposite to the first side. This preferred embodiment is a 62^{nd} embodiment of the invention, that preferably depends on any of the 49^{th} to 61^{st} embodiments of the invention.

In a preferred embodiment, the additional step is conducted after the further step. In a further preferred embodiment, the additional step is conducted prior to the further step.

In a preferred embodiment of the method 1, the method further comprises a step of creating a straight crease line in the carrier layer, wherein the straight crease line comprises a groove on a further side of the carrier layer which is opposite to the first side. This preferred embodiment is a 63^{rd} embodiment of the invention, that preferably depends on any of the 49^{th} to 62^{nd} embodiments of the invention.

In a preferred embodiment, this step is conducted after the method step c), preferably after the additional method step. In a further preferred embodiment, this step is conducted prior to the method step b), preferably prior to the further method step or after the additional method step or both.

In a preferred embodiment of the method 1, the carrier layer is provided in the method step a) in rolled-up form forming a roll. This preferred embodiment is a 64^{th} embodiment of the invention, that preferably depends on any of the 49^{th} to 63^{rd} embodiments of the invention.

In a preferred embodiment of the method 1, the method further comprises a step of separating the sheet-like composite into a multitude of blanks, wherein each of the blanks is for production of a single closed container. This preferred embodiment is a 65^{th} embodiment of the invention, that preferably depends on any of the 49^{th} to 64^{th} embodiments of the invention.

Preferably, the separating is conducted mechanically, more preferably by cutting or punching.

A 66^{th} embodiment of the invention is a sheet-like composite which is obtainable by the method 1 according to any of the 49^{th} to 65^{th} embodiments of the invention.

In a preferred embodiment of the sheet-like composite, the sheet-like composite is a blank for production of a single closed container. This preferred embodiment is a 67^{th} embodiment of the invention, that preferably depends on the 66^{th} embodiment of the invention.

A 68^{th} embodiment of the invention is a container precursor or a closed container, in each case comprising at least a sheet-like region of the sheet-like composite according to any of the 1^{st} to 48^{th} of the invention, or of a sheet-like composite which is obtainable by the method 1 according to any of the 49^{th} to 65^{th} embodiments of the invention.

In a preferred embodiment of the container precursor or the closed container, the at least sheet-like region comprises at least two folds, preferably at least 3 folds, more preferably at least 4 folds. This preferred embodiment is a 69^{th} embodiment of the invention, that preferably depends on the 68^{th} embodiment of the invention.

The preceding folds are preferably longitudinal folds.

In a preferred embodiment of the container precursor of the closed container, the at least sheet-like region comprises a first longitudinal edge and a further longitudinal edge, wherein the first longitudinal edge is joined to the further longitudinal edge, thereby forming a longitudinal seam of the container precursor or the closed container. This preferred embodiment is a 70^{th} embodiment of the invention, that preferably depends on the 68^{th} or 69^{th} embodiment of the invention.

In a preferred embodiment of the closed container, the closed container contains a food or drink product. This preferred embodiment is an 71^{st} embodiment of the invention, that preferably depends on any of the 68^{th} to 70^{th} embodiments of the invention.

In a preferred embodiment of the closed container, the closed container further comprises an opening aid. This preferred embodiment is an 72^{nd} embodiment of the invention, that preferably depends on any of the 68^{th} to 71^{st} embodiments of the invention.

Preferably, the opening aid is designed and arranged to open the closed container in a region of the through-hole in the carrier layer. Preferably, the opening aid is joined to the at least sheet-like region. Further preferably, the opening aid is joined to a hole-covering layer in a region of the through-hole in the carrier layer. Additionally or alternatively preferred, the opening aid at least partially surrounds the through-hole in the carrier layer.

An 73^{rd} embodiment of the invention is a method 2 comprising, as method steps:
A. providing at least a sheet-like region of the sheet-like composite according to any of the 1^{st} to 48^{th} embodiments of the invention, or of a sheet-like composite which is obtainable by the method 1 according to any of the 49^{th} to 65^{th} embodiments of the invention, the at least sheet-like region comprising a first longitudinal edge and a further longitudinal edge;
B. folding the at least sheet-like region; and
C. contacting and joining the first longitudinal edge to the further longitudinal edge, thereby obtaining a longitudinal seam.

Preferably, the at least sheet-like region comprises the through-hole in the carrier layer. Preferably, at least two, more preferably at least 3, most preferably 4, longitudinal folds are obtained by the folding action in step B. The method preferably is a process for producing a container precursor, preferably a method of producing a container precursor. The container precursor preferably is the container precursor of the invention according to any one of its embodiments.

A 74^{th} embodiment of the invention is a container precursor which is obtainable by the method 2 according to the 73^{rd} embodiment of the invention.

An 75^{th} embodiment of the invention is a method 3 comprising, as method steps:
A] providing the container precursor according to any of the 68^{th} to 70^{th} embodiments of the invention, or a container precursor which is obtainable by the method 2 according to the 73^{rd} embodiment of the invention;
B] forming a base region of the container precursor by folding the at least sheet-like region;
C] closing the base region;
D] filling the container precursor with a food or drink product; and
E] closing the container precursor in a top region (403), thereby obtaining a closed container.

The method 3 preferably is a method for producing a closed container, preferably a method of producing a closed container. The closed container preferably is the closed container of the invention according to any one of its embodiments. The closing in the method step C] preferably comprises a sealing, more preferably a hot air sealing. The closing in the method step E] preferably comprises a sealing, more preferably an ultrasound sealing.

In a preferred embodiment of the method 3, the closing in the method step C] or E] or in both comprises a sealing method, wherein the sealing method is effected by one selected from the group consisting of irradiation, contacting with a hot solid, inducement of mechanical vibration, and contacting with a hot gas, or by a combination of at least two of these. This preferred embodiment is an 76^{th} embodiment of the invention, that preferably depends on the 75^{th} embodiment of the invention.

In this case, a different sealing method from the aforementioned group may be used in the method step C] from that in the method step E] and vice versa. However, it is also possible to use the same sealing method in both the of the steps C] and E].

In a preferred embodiment of the method 3, the method further comprises a method step of
F] joining an opening aid to the closed container.

This preferred embodiment is an 77^{th} embodiment of the invention, that preferably depends on the 75^{th} or 76^{th} embodiment of the invention.

A 78^{th} embodiment of the invention is a closed container which is obtainable by the method 3 according to any of the 75^{th} to 77^{th} embodiments of the invention.

A 79^{th} embodiment of the invention is a use of the sheet-like composite according to any of the 1^{st} to 48^{th} embodiments of the invention, or of a sheet-like composite which is obtainable by the method 1 according to any of the 49^{th} to 65^{th} embodiments of the invention for production of a food or drink product container.

Features described as preferred in one category of the invention, for example according to the sheet-like composite, are analogously preferred in an embodiment of the other categories according to the invention, such as the methods and the use.

### Sheet-like composite

All laminates, in particular sheet-like or planar laminates, which are conceivable within the context of the invention and which appear to the person skilled in the art to be suitable in the context of the invention for the production of dimensionally stable foodstuff containers are to be considered as sheet-like composites. Sheet-like composites for the manufacture of food or drink product containers are also referred to as laminates. Such sheet-like composites have a sequence of layers superimposing each other in a sheet-like or planar manner. The sheet-like composites are often composed of a thermoplastic polymer layer, a carrier layer, often made of cardboard or paper, which gives the container its dimensional stability, an optional thermoplastic polymer layer and/or an optional adhesion promoter layer, a barrier layer and at least one further thermoplastic polymer layer. Basically, *"sheet-like composite"* is used herein as a generic term that includes both semi-endless roll material and a blank of such roll material. The blank is preferably designed to produce a single container. The sheet-like composite can be a flat or three-dimensional object. The latter is, in particular the case, if the sheet-like composite has been folded or rolled up.

### Layers of the sheet-like composite

The layers of the layer sequence have been joined to one another in a planar manner, preferably over their entire surfaces. Here, the area of the through-hole or part of this area may make an exception. Two layers are joined together when their adhesion to each other exceeds Van der Waals forces of attraction. Preferably, layers joined with one another are one selected from the group consisting of joined with one another by coating, laminated together, sealed together, glued together, and pressed together, or a combination of at least two thereof. Layers joined with one another by coating are preferably joined with one another by melt coating or by vapour deposition. A preferred melt coating is a melt extrusion coating.

Unless stated otherwise, in a layer sequence, the layers may follow one another indirectly, i.e. with one or at least two intermediate layers, or directly, i.e. with no intermediate layer. This is the case especially in the form of words in which one layer is superimposed to another layer, or one layer is joined to another layer. A form of words in which a layer sequence comprises enumerated layers means that at least the layers specified are present in the sequence specified. This form of words does not necessarily mean that these layers follow on directly from one another. A form of words in which two layers adjoin one another means that these two layers follow on from one another directly and hence with no intermediate layer.

### Carrier layer

The carrier layer used may be any material which appears suitable to a person skilled in the art for this purpose and which has sufficient strength and stiffness to impart stability to the container, made from the sheet-like composite, to such an extent that the container in the filled state essentially retains its shape (dimensional stability). Thus, the invention relates to the technical field of dimensionally stable food or drink product containers. Dimensionally stable containers of this kind should in principle be distinguished from pouches and bags, which are usually produced from thinner films.

For the carrier layer, as well as to a number of plastics, preference is given to plant-based fibrous materials, especially pulps, preferably limed, bleached and/or unbleached pulps, with paper, paperboard and cardboard being especially preferred. Thus, a preferred carrier layer comprises a multitude of fibres. The basis weight of the carrier layer is preferably in a range of 120 to 450 g/m², more preferably in a range of 130 to 400 g/m² and most preferably in a range of 150 to 380 g/m². The carrier layer preferably has a bending stiffness in a first direction in a range from 70 to 700 mN, more preferably from 80 to 650 mN. In the case of a carrier layer comprising a plurality of fibres, the first direction is preferably an orientation direction of the fibres. A carrier layer comprising a plurality of fibres further preferably has a bending stiffness in a further direction perpendicular to the first direction in a range from 10 to 350 mN, more preferably from 20 to 300 mN. A preferred planar composite with the carrier layer has a bending stiffness in the first direction in a range of 100 to 700 mN. Further preferably, the aforementioned planar composite has a bending stiffness in the further direction in a range of 50 to 500 mN.

A preferred cardboard generally has a single or multi-layer structure and may be coated on one or both sides with one or more cover layers. Furthermore, a preferred cardboard has a residual moisture content of less than 20 % by weight, preferably from 2 to 15 % by weight and particularly preferably from 4 to 10 % by weight based on the total weight of the cardboard. A particularly preferred cardboard has a multi-layer structure. Furthermore, the cardboard preferably has on the surface facing the environment at least one, but particularly preferably at least two, cover layers known to the skilled person as a *"coating"* or *"paper coating"* (in German: *"Strich"*). Furthermore, a preferred cardboard has a Scott-Bond value (according to Tappi 569) in a range from 100 to 360 J/m², preferably from 120 to 350 J/m² and particularly preferably from 135 to 310 J/m². The above ranges make it possible to provide a composite from which a container can be folded with high tightness, easily and to low tolerances.

Preferably, the carrier layer comprises at least 2, more preferably at least 3, particularly preferably exactly 3 or 5, sub-layers, each of a fibre-containing material, wherein the sub-layers are superimposed to one another and joined to one another. The fibre-containing materials of the individual sub-layers may differ at least partially from one another or may all be the same. A further particularly preferred carrier layer comprises, as superimposed and interconnected sub-layers of a sub-layer sequence, preferably in a direction from an outer side of the carrier layer to an inner side of the carrier layer, a first sub-layer comprising a fibrous material, a second sub-layer comprising a fibrous material and a third sub-layer comprising a fibrous material. The fibre-containing materials of the first to third sub-layers may be the same or different from each other. Furthermore, in addition to the aforementioned layer sequence, a preferred carrier layer includes at least one cover layer as a further sub-layer. Preferably, the layer sequence of first to third sub-layers is superimposed on an outer side of the carrier layer with at least one cover layer as a further sub-layer. Alternatively or additionally preferred, the layer sequence of first to third sub-layers is superimposed on an inner side of the carrier layer with at least one cover layer as a further sub-layer. Preferably, an average fibre length of the plurality of fibres of the fibrous material of the first sub-layer is less than an average fibre length of the plurality of fibres of the fibrous material of the third sub-layer, preferably by 0.1 to 3 mm, more preferably by 0.5 to 2.5 mm, most preferably by 1 to 2.0 mm.

The terms *"paperboard", "cardboard"* and *"paper"* are used herein according to the definitions in the standard DIN 6735:2010. In addition, cardboard is preferably a material that has a combination of properties of paper and paperboard. Further, cardboard preferably has a basis weight in a range of 150 to 600 g/m².

The carrier layer plane is a plane in which the carrier layer extends in a sheet-like manner. As the sheet-like composite with the carrier layer may be bent or curved, the carrier layer plane can also be bent or curved. In any case, the first and further carrier layer directions lie in the carrier layer plane. Preferably, the first carrier layer direction is perpendicular to the further carrier layer direction.

### Cover layer

A preferred cover layer is a *"paper coating"* (in German: *"Strich"*)*.* In papermaking, a *"paper coating",* also referred to as *"coating",* is a cover layer comprising inorganic solid particles, preferably pigments and additives. The *"paper coating"* is preferably applied as a liquid phase, preferably as a suspension or dispersion, to a surface of a paper- or cardboard-comprising layer. A preferred dispersion is an aqueous dispersion. A preferred suspension is an aqueous suspension. Another preferred liquid phase includes inorganic solid particles, preferably pigments; a binder; and additives. A preferred pigment is selected from the group consisting of calcium carbonate, kaolin, talc, silicate, a plastic pigment and titanium dioxide. A preferred kaolin is a calcined kaolin. A preferred calcium carbonate is one selected from the group consisting of marble, chalk and a precipitated calcium carbonate (PCC) or a combination of at least two thereof. A preferred silicate is a layered silicate. A preferred plastic pigment is spherical, preferably hollow spherical. A preferred binder is one selected from the group consisting of styrene-butadiene, acrylate, acrylonitrile, a starch and a polyvinyl alcohol or a combination of at least two thereof, acrylate being preferred. A preferred starch is one selected from the group consisting of cationically modified, anionically modified, and fragmented or a combination of at least two thereof. A preferred additive is one selected from the group consisting of a rheology modifier, a shade dye, an optical brightener, a carrier, a flocculant, a deaerator, and a surface energy modifier, or a combination of at least two thereof. A preferred deaerator is a coating colour deaerator, preferably silicone-based or fatty acid-based or both. A preferred surface energy modifier is a surfactant.

### Barrier layer

The barrier layer preferably has sufficient barrier action against oxygen or water vapour or both to allow the production of foodstuff containers from the sheet-like composite. Accordingly, the barrier layer is preferably an oxygen barrier layer or a water vapour barrier layer or both. An oxygen barrier layer has a barrier effect against transmission of oxygen. A water vapour barrier layer has a barrier effect against transmission of water vapour. For this purpose, the barrier layer comprises the barrier material layer. The name of this layer refers to the barrier material layer comprising the material which provides the barrier action. The barrier material layer is a coating or deposited layer which needs a substrate. For this purpose, the barrier layer comprises the barrier substrate layer. The barrier layer preferably is a prefabricated barrier film which preferably has been laminated to the carrier layer, preferably using the polymer layer C or the polymer layer D or both as laminating agents. The barrier layer, preferably, adjoins the inner polymer layer F.

### Barrier substrate layer

The barrier layer mandatorily comprises the barrier material layer and the barrier substate layer. The barrier substate layer serves as substrate for the barrier material layer. In particular, the barrier substate layer imparts stability to the barrier layer to such an extent that the barrier layer can be rolled up and further processed, in particular laminated, to the carrier layer, substantially without the barrier material layer suffering damage from mechanical stress. In this context, the barrier substrate layer is preferably suitable for being coated with a barrier material to allow for a thickness of the barrier material layer in the range from 1 nm to 1 µm, preferably from 1 to 500 nm, more preferably from 1 to 300 nm, more preferably from 1 to 100 nm, more preferably from 1 to 90 nm, more preferably from 1 to 80 nm, more preferably from 1 to 70 nm, more preferably from 1 to 60 nm, more preferably from 1 to 50 nm, more preferably from 1 to 40 nm, more preferably from 1 to 30 nm, even more preferably from 1 to 20 nm, most preferably from 5 to 20 nm. Preferably, a surface of the barrier substate layer is sufficiently smooth for this purpose. A preferred barrier layer comprises the barrier substrate layer in a proportion in the range from 95 to 99.99 wt.-%, preferably from 97 to 99.97 wt.-%, more preferably from 98 to 99.95 wt.-%, even more preferably from 99 to 99.9 wt.-%, most preferably from 99.5 to 99.9 wt.-%, based in each case on the weight of the barrier layer.

Preferably, the barrier substrate layer comprises a polyolefin in a proportion in the range from 50 to 100 wt.-%, preferably from 60 to 100 wt.-%, more preferably from 70 to 100 wt.-%, more preferably from 80 to 100 wt.-%, more preferably from 90 to 100 wt.-%, even more preferably from 95 to 100 wt.-%, most preferably from 98 to 100 wt.-%, in each case based on the weight of the barrier substrate layer. Preferably, the barrier substrate layer consists of the polyolefin. A preferred polyolefin of the barrier substrate layer is a polyethylene (PE) or a polypropylene (PP) or both. The polyolefin of the barrier substrate layer is preferably oriented. The oriented polyolefin has preferably been monoaxially oriented or biaxially oriented. A particularly preferred polyolefin is a monoaxially oriented PE (MoPE) or a biaxially oriented polypropylene (BoPP).

Preferably, the barrier substrate layer is a polyolefin layer. A polyolefin layer is a layer which essentially consists of one selected from the group consisting of a polyolefin homopolymer, a polyolefin copolymer, a mixture of polyolefin homopolymers, and a mixture of polyolefin co-polymers, or a combination of at least two thereof. A preferred the barrier substrate layer is a polyethylene layer. A polyethylene layer is a layer which essentially consists of one selected from the group consisting of a polyethylene homopolymer, a polyethylene copolymer, a mixture of polyethylene homopolymers, and a mixture of polyethylene copolymers, or a combination of at least two thereof. Another preferred the barrier substrate layer is a polypropylene layer. A polypropylene layer is a layer which essentially consists of one selected from the group consisting of a polypropylene homopolymer, a polypropylene copolymer, a mixture of polypropylene homopolymers, and a mixture of polypropylene copolymers, or a combination of at least two thereof. Additionally or alternatively preferred, the barrier substrate layer is monoaxially oriented or biaxially oriented. A particularly preferred barrier substrate layer is a monoaxially oriented polyethylene layer. Another particularly preferred barrier substrate layer is a biaxially oriented polypropylene layer.

### Barrier material layer

The barrier material layer used may be any material which is suitable for a person skilled in the art for this purpose and which has sufficient barrier action, especially with respect to oxygen or water vapour or both. For this purpose, the barrier material layer preferably comprises a barrier material in a proportion of at least 50 wt.-%, preferably of at least 60 wt.-%, more preferably of at least 70 wt.-%, more preferably of at least 80 wt.-%, more preferably of at least 90 wt.-%, even more preferably of at least 95 wt.-%, most preferably of at least 98 wt.-%, based in each case on the weight of the barrier material layer, wherein the barrier material provides the barrier action with respect to oxygen or water vapour or both. Preferably, the barrier material layer consists of the barrier material. A preferred barrier layer comprises the barrier material layer or a barrier material in a proportion in the range from 0.01 to 5 wt.-%, preferably from 0.03 to 3 wt.-%, more preferably from 0.05 to 2 wt.-%, even more preferably from 0.1 to 1 wt.-%, most preferably from 0.1 to 0.5 wt.-%, based in each case on the weight of the barrier layer.

The barrier material layer is preferably an uninterrupted layer. Additionally or alternatively preferred, the barrier material layer is a film or a coating. Here, a preferred film is a thin film. A thin film is a film which is obtainable by thin-film deposition. Thus, a preferred barrier material layer is obtainable by deposition. A preferred deposition is a thin-film deposition. Most thin-film deposition techniques allow to control the layer thickness within a few tens of nanometres. A preferred technique of thin-film deposition is a physical deposition or a chemical deposition or both. Chemical deposition means that a fluid undergoes a chemical change at a solid surface, leaving a solid layer, here the barrier material layer. A preferred chemical deposition is based on a fluid selected from the group consisting of a liquid precursor, a gaseous precursor, and a plasma, or a combination of at least two thereof. A preferred chemical deposition which is based on a liquid precursor is plating, preferably electroplating, more preferably electrochemical deposition; chemical solution deposition (CSD), chemical bath deposition (CBD), spin coating, or dip coating. A preferred chemical deposition which is based on a gaseous precursor is chemical vapour deposition (CVD) or plasma enhanced chemical vapour deposition (PECVD). Physical deposition uses mechanical, electromechanical or thermodynamic means to produce a thin film of solid, here the barrier material layer. A preferred physical deposition is physical vapour deposition (PVD). Thus, the barrier material layer is preferably obtainable by depositing a barrier material onto the barrier substrate layer, or the further polymer layer which is superimposed on the barrier substrate layer. In any case, the barrier substrate layer acts as substrate for the barrier material which forms the barrier material layer.

A preferred barrier material is selected from the group consisting of an oxide, a metal, a silicon-containing compound and a barrier polymer, or a combination of at least two of these. A preferred oxide is an oxide of one selected from the group consisting of one or more metals, one or more semimetals and one or more nonmetals, or a combination of at least two of these. A preferred oxide of a metal is one selected from the group consisting of an aluminium oxide, for example Al₂O₃; a magnesium oxide, for example MgO; a titanium oxide, for example TiO₂; a tin oxide, for example an indium tin oxide (ITO), Zn₂SnO₄, SnO, Sn₂O₃ and SnO₂; a zinc oxide, for example ZnO; and an indium oxide, for example an indium tin oxide (ITO), InO, In₂O₃ and InO₂, or a combination of at least two of these. A preferred oxide of a semimetal is a silicon oxide, for example SiO₂. A preferred silicon-containing compound is a silicon nitride, for example Si₃N₄, or an organosilicon compound. A preferred organosilicon compound is a siloxane. A preferred barrier polymer is a vinyl polymer or a polyacrylic acid or both. A preferred vinyl polymer is a polyvinylidene chloride (PVDC) or a polyvinyl alcohol (PVOH) or both. A particularly preferred barrier material is an aluminium oxide, a combination of multiple aluminium oxides, a silicon oxide, or a combination of multiple silicon oxides.

### Polymer layers

In the following, the term *"polymer layer"* refers in particular to the polymer layers A, C and D and the inner polymer layers F, G and H. The *"inner"* in *"inner polymer layer F", "inner polymer layer G"* and *"inner polymer layer H"* refers to the respective layer being superimposed to the barrier layer on a side of the barrier layer which faces away from the carrier layer, i.e. to the inner side of the barrier layer.

The polymer layers are each based on a polymer or a polymer blend, i.e. the polymer layers comprise a majority of the polymer or polymer blend. A preferred polymer is a thermoplastic polymer, more preferably a polyolefin. The polymer layers are preferably incorporated or applied into the sheet-like composite in an extrusion process, preferably by melt extrusion coating. In addition to the polymer or polymer blend, each polymer layer may comprise further constituents. The further constituents of the polymer layers are preferably constituents which do not adversely affect the behaviour of the polymer melt when applied as a layer. The further constituents may be, for example, inorganic compounds, such as metal salts, or further plastics, such as further thermoplastics.

In general, suitable polymers for the polymer layers are in particular those which are easy to process due to good extrusion behaviour. Among these, polymers obtained by chain polymerisation are suitable, in particular polyolefins, whereby cyclic olefin co-polymers (COC), polycyclic olefin co-polymers (POC), in particular polyethylene (PE) and polypropylene (PP), are particularly preferred and polyethylene is especially preferred. Among the polyethylenes, HDPE (high density polyethylene), MDPE (medium density polyethylene), LDPE (low density polyethylene), LLDPE (linear low density polyethylene) and VLDPE (very low density polyethylene) as well as blends of at least two of them are preferred. Suitable polymers, preferably, have a melt flow rate (MFR) in a range from 1 to 25 g/10 min, preferably in a range from 2 to 20 g/10 min and particularly preferably in a range from 2,5 to 15 g/10 min. Additionally or alternatively preferred, suitable polymer layers have a density in a range of 0.890 g/cm³ to 0.980 g/cm³, preferably in a range of 0.895 g/cm³ to 0.975 g/cm³, and more preferably in a range of 0.900 g/cm³ to 0.970 g/cm³. The polymer layers preferably have at least one melting temperature in a range from 80 to 155 °C, preferably in a range from 90 to 145 °C, and more preferably in a range from 95 to 135 °C.

### Polymer layer A

The polymer layer A preferably is a thermoplastic polymer layer. The polymer layer A preferably comprises at least one polyolefin, more preferably at least one polyethylene or at least one polypropylene or both. Preferred polyethylenes are LDPE and HDPE as well as mixtures thereof. A particularly preferred polyethylene is a LDPE. In this context, a preferred LDPE has a melt flow index in the range from 2 to 6 g/10 min, preferably from 3 to 5 g/10 min, more preferably from 3.5 to 4.5 g/10 min. Preferably, the polymer layer A comprises the at least one polyolefin, more preferably the at least one polyethylene or the at least one polypropylene or both together, in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, most preferably at least 90 % by weight, in each case based on the total weight of the polymer layer A. A preferred polymer layer A comprises at least 50 % by weight, preferably at least 60 % by weight, more preferably at least 70 % by weight, even more preferably at least 80 % by weight, most preferably at least 90 % by weight, in each case based on the weight of the polymer layer A, of one or more LDPEs. A preferred polymer layer A consists of one or more LDPEs. Preferably, the polymer layer A adjoins the carrier layer. Preferably, the polymer layer A covers the through-hole in the carrier layer as a further hole-covering layer. Preferably, the polymer layer A is obtainable from a polymer composition A. A preferred polymer composition A is a polymer granulate or a polymer melt. Preferably, the polymer composition A consists of the same material or the same materials as the polymer layer A. If the polymer layer A consists of more than one material, the polymer composition A preferably consists of the same materials in the same proportions.

### Polymer layer C

The polymer layer C preferably is a thermoplastic polymer layer. The polymer layer C preferably comprises at least one polyolefin, more preferably at least one polyethylene or at least one polypropylene or both. Here, particularly preferred polyethylenes are LDPEs and HDPEs. In this context, a preferred LDPE has a melt flow index in the range from 2 to 6 g/10 min, preferably from 3 to 5 g/10 min, more preferably from 3.5 to 4.5 g/10 min. Preferably, the polymer layer C comprises the at least one polyolefin, more preferably the at least one polyethylene or the at least one polypropylene or both together, in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, most preferably at least 90 % by weight, in each case based on the total weight of the polymer layer C. A preferred polymer layer C comprises at least 50 % by weight, preferably at least 60 % by weight, more preferably at least 70 % by weight, even more preferably at least 80 % by weight, most preferably at least 90 % by weight, in each case based on the weight of the polymer layer C, of one or more PEs. Preferably, the polymer layer C is disposed between the carrier layer and the polymer layer D. Additionally or alternatively preferred, the polymer layer C adjoins the carrier layer or the polymer layer D or both. Preferably, the polymer layer C covers the through-hole in the carrier layer as a further hole-covering layer. Preferably, the polymer layer C is obtainable from a polymer composition C. A preferred polymer composition C is a polymer granulate or a polymer melt. Preferably, the polymer composition C consists of the same material or the same materials as the polymer layer C.

If the polymer layer C consists of more than one material, the polymer composition C preferably consists of the same materials in the same proportions.

### Polymer layer D

The polymer layer C preferably is an adhesion promoter layer. Accordingly, the polymer layer C is preferably based on an adhesion promoter layer. Preferably, the polymer layer D is disposed between the polymer layer C and the barrier layer. Additionally or alternatively preferred, the polymer layer D adjoins the barrier layer or the polymer layer C or both. Preferably, the polymer layer D covers the through-hole in the carrier layer as a further hole-covering layer. Preferably, the polymer layer D is obtainable from a polymer composition D. A preferred polymer composition D is a polymer granulate or a polymer melt. Preferably, the polymer composition D consists of the same material or the same materials as the polymer layer D. If the polymer layer D consists of more than one material, the polymer composition D preferably consists of the same materials in the same proportions.

### Inner polymer layer F

The inner polymer layer F preferably is a thermoplastic polymer layer. Preferably, the inner polymer layer F covers the through-hole in the carrier layer as a further hole-covering layer. Preferably, the inner polymer layer F is disposed between the barrier layer and the inner polymer layer G. Preferably, the inner polymer layer F adjoins the barrier layer or the inner polymer layer G or both. Preferably, the inner polymer layer F is obtainable from a polymer composition F. A preferred polymer composition F is a polymer granulate or a polymer melt. Preferably, the polymer composition F consists of the same material or the same materials as the inner polymer layer F. If the inner polymer layer F consists of more than one material, the polymer composition F preferably consists of the same materials in the same proportions.

Preferably, the inner polymer layer F comprises a polymer blend, preferably in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, most preferably at least 90 % by weight, in each case based on the total weight of the inner polymer layer F. Preferably, the inner polymer layer F consists of a mPE or of the polymer blend. In a preferred embodiment of the sheet-like composite, the mPE of the inner polymer layer F has at least one of, preferably two of, more preferably all of, the following features:
a] the mPE has a molecular weight distribution with
   i] exactly 1 local maximum, or
   ii] exactly 2 local maxima;
b] the mPE has
   i] exactly 1 melting temperature, or
   ii] exactly 2 melting temperatures;
c] the mPE is a mLLDPE;
d] the mPE comprises
   i] C₈-α-olefin-derived units, or
   ii] C₆-α-olefin-derived units.

A particularly preferred mPE of the inner polymer layer F has one of the following combinations of the above features: a], b], c], d], a] + b] + c] + d], a]i], a]ii], b]i], b]ii], d]i], d]ii], a]i] + b]i], a]i] + b]i] + c], a]i] + b]i] + c] + d]i], c] + d]i], b]i] + c], a]ii] + b]ii], a]ii] + b]ii] + c], a]ii] + b]ii] + c] + d]ii], c] + d]ii], b]ii] + c].

A preferred LDPE of the inner polymer layer F, preferably of the polymer blend, has a melt flow index in the range from 5 to 9 g/10 min, preferably from 6 to 8 g/10 min, more preferably from 6.5 to 7.5 g/10 min.

### Inner polymer layer G

The inner polymer layer G preferably is a thermoplastic polymer layer. The inner polymer layer G preferably comprises at least one polyolefin, more preferably at least one polyethylene or at least one polypropylene or both. Here, particularly preferred polyethylenes are LDPEs. In this context, a preferred LDPE has a melt flow index in the range from 5 to 9 g/10 min, preferably from 6 to 8 g/10 min, more preferably from 6.5 to 7.5 g/10 min. Preferably, the inner polymer layer G comprises the at least one polyolefin, more preferably the at least one polyethylene or the at least one polypropylene or both together, in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, most preferably at least 90 % by weight, in each case based on the total weight of the inner polymer layer G. A preferred inner polymer layer G comprises at least 50 % by weight, preferably at least 60 % by weight, more preferably at least 70 % by weight, even more preferably at least 80 % by weight, most preferably at least 90 % by weight, in each case based on the weight of the inner polymer layer G, of one or more LDPEs. A preferred inner polymer layer G consists of one or more LDPEs. Preferably, the inner polymer layer G is disposed between the inner polymer layer F and the inner polymer layer H. Preferably, the inner polymer layer G adjoins the inner polymer layer F or the inner polymer layer H or both. Preferably, the inner polymer layer G covers the through-hole in the carrier layer as a further hole-covering layer. Preferably, the inner polymer layer G is obtainable from a polymer composition G. A preferred polymer composition G is a polymer granulate or a polymer melt. Preferably, the polymer composition G consists of the same material or the same materials as the inner polymer layer G. If the inner polymer layer G consists of more than one material, the polymer composition G preferably consists of the same materials in the same proportions

### Inner polymer layer H

The inner polymer layer H preferably is a thermoplastic polymer layer. The inner polymer layer H preferably comprises at least one polyolefin, more preferably at least one polyethylene or at least one polypropylene or both. Here, particularly preferred polyethylenes are LDPEs and LLDPEs, preferably mLLDPEs. In this context, a preferred LDPE has a melt flow index in the range from 5 to 9 g/10 min, preferably from 6 to 8 g/10 min, more preferably from 6.5 to 7.5 g/10 min. A preferred inner polymer layer H comprises the at least one polyolefin, more preferably the at least one polyethylene or the at least one polypropylene or both together, in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, most preferably at least 90 % by weight, in each case based on the total weight of the inner polymer layer H.

Preferably, the inner polymer layer H comprises a polymer blend in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, most preferably at least 90 % by weight, in each case based on the total weight of the inner polymer layer H. It is particularly preferred that the inner polymer layer H consists of the polymer blend. A preferred polymer blend comprises at least two polyolefins, more preferably at least two polyethylenes. Preferred polyethylenes are those given above for the inner polymer layer H. In a preferred embodiment, the inner polymer layer H comprises the LDPE, preferably of the polymer blend, in a proportion in a range from 50 to 90 wt.-%, preferably from 60 to 80 wt.-%, most preferably from 65 to 75 wt.-%, and the mPE, preferably of the polymer blend, in a proportion in a range from 10 to 50 wt.-%, preferably from 20 to 40 wt.-%, most preferably from 25 to 35 wt.-%, wherein the proportions in wt.-% are in each case based on the total weight of the inner polymer layer H. In a further preferred embodiment, the inner polymer layer H comprises the LDPE, preferably of the polymer blend, in a proportion in a range from 5 to 40 wt.-%, preferably from 10 to 30 wt.-%, most preferably from 15 to 25 wt.-%, and the mPE, preferably of the polymer blend, in a proportion in a range from 60 to 95 wt.-%, preferably from 70 to 90 wt.-%, most preferably from 75 to 85 wt.-%, wherein the proportions in wt.-% are in each case based on the total weight of the inner polymer layer H.

Preferably, the inner polymer layer H is the innermost layer of the sheet-like composite. Thus, the inner surface of the sheet-like composite is preferably a surface of the inner polymer layer H. Additionally or alternatively preferred, the inner polymer layer H adjoins the inner polymer layer G. Preferably, the inner polymer layer H covers the through-hole in the carrier layer as a further hole-covering layer. Preferably, the inner polymer layer H is obtainable from a polymer composition H. A preferred polymer composition H is a polymer granulate or a polymer melt. Preferably, the polymer composition H consists of the same material or the same materials as the inner polymer layer H. If the inner polymer layer H consists of more than one material, the polymer composition H preferably consists of the same materials in the same proportions.

### Further polymer layer

If present, the further polymer layer is disposed between the barrier substrate layer and the barrier material layer. A preferred further polymer layer comprises a polyvinyl alcohol (PVOH) or an ethylene vinyl alcohol (EVOH) or a blend of both, in each case preferably in a proportion of at least 50 wt.-%, more preferably at least 60 wt.-%, more preferably at least 70 wt.-%, more preferably at least 80 wt.-%, more preferably at least 90 wt.-%, even preferably at least 95 wt.-%, in each case based on the weight of the further polymer layer. Preferably, the further polymer layer essentially consists of the PVOH or the EVOH or the blend of both. Preferably, the sub-layer sequence comprises the further polymer layer. In this case, the barrier layer comprises the further polymer layer, i.e. the further polymer layer is a sublayer of the barrier layer. A preferred barrier layer is a prefabricated film which has been laminated to the carrier layer. In the technical field of prefabricated films for packaging, the further polymer layer may also be referred to as a skin layer as it forms a thin skin of the barrier substrate layer.

### Polyolefin

In the context of the invention, a preferred polyolefin is a polyethylene (PE) or a polypropylene (PP) or both. A preferred polyethylene is one selected from the group consisting of an LDPE, an LLDPE, and an HDPE, or a combination of at least two thereof. A further preferred polyolefin is an mPolyolefin (polyolefin produced by means of a metallocene catalyst). Suitable polyethylenes have a melt flow rate (MFI - melt flow index = MFR - melt flow rate) in a range from 1 to 25 g/10 min, preferably in a range from 2 to 20 g/10 min and particularly preferably in a range from 2.5 to 15 g/10 min, and/or a density in a range of 0.910 g/cm³ to 0.935 g/cm³ preferably in a range of 0.912 g/cm³ to 0.932 g/cm³, and more preferably in a range of 0.915 g/cm³ to 0.930 g/cm³.

### mPolymer

An mPolymer is a polymer produced by means of a metallocene catalyst. A metallocene is an organometallic compound in which a central metal atom is located between two organic ligands, such as cyclopentadienyl ligands. A preferred mPolymer is an mPolyolefin, preferably an mPolyethylene (mPE) or an mPolypropylene or both. A preferred mPolyethylene is one selected from the group consisting of an mLDPE, an mLLDPE, and an mHDPE, or a combination of at least two thereof. A preferred mPolyolefin is characterised by at least a first melting temperature and a second melting temperature. Preferably, the mPolyolefin is characterised by a third melting temperature in addition to the first and second melting temperatures. A preferred first melting temperature is in a range from 84 to 108 °C, preferably from 89 to 103 °C, more preferably from 94 to 98 °C. A preferred second melting temperature is in a range from 100 to 124 °C, preferably from 105 to 119 °C, more preferably from 110 to 114 °C.

### Polypropylene

In the context of the invention, in particular in the context of the barrier substrate layer, a preferred polypropylene is a homopolymer or a copolymer which comprises propylene-derived units in a proportion the range from 60 to 100 wt.-%, preferably from 70 to 100 wt.-%, more preferably from 80 to 100 wt.-%, more preferably from 85 to 100 wt.-%, more preferably from 90 to 100 wt.-%, more preferably from 95 to 100 wt.-%, even more preferably from 98 to 100 wt.-%, most preferably from 99 to 100 wt.-%, based in each case on the weight of the polypropylene. Additionally or alternatively preferred, the polypropylene comprises C₂-α-olefin-derived units, or C₄ to C₁₀-α-olefin-derived units, or both in a proportion the range from 0 to 40 wt.-%, preferably from 1 to 30 wt.-%, more preferably from 5 to 20 wt.-%, even more preferably from 5 to 15 wt.-%, most preferably from 5 to 10 wt.-%, based in each case on the weight of the polypropylene. The polypropylene may be produced by any suitable process which is known to the skilled person using any suitable catalyst which is known to the skilled person. A preferred polypropylene has been produced using a Ziegler-Natter catalyst, or a single-site catalyst, or both. A preferred single-site catalyst is a metallocene-catalyst. Additionally or alternatively preferred, the polypropylene has been produced by a process, selected from the group, consisting of a solution process, a slurry process, a high pressure process, and a gas phase process, or a combination of at least two thereof.

### Colour application

Preferably, the colour application is a printed layer or a decoration or both. Additionally or alternatively preferred, the colour application is disposed between the polymer layer A and the carrier layer, or superimposed to the polymer layer A on a side of the polymer layer A which faces away from the carrier layer. In the latter case, the colour application is preferably not superimposed by any layer of the sheet-like composite on the side of the colour application which faces away from the carrier layer. Preferably, the colour application adjoins the polymer layer A or the carrier layer or both. Preferably, the colour application includes at least one colourant, more preferably at least 2, more preferably at least 3, more preferably at least 4, even more preferably at least 5 and most preferably at least 6 colourants.

### Colourant

Useful colourants include both solid and liquid colourants that are known to the person skilled in the art and are suitable for the present invention. According to DIN 55943:2001-10, colourant is the collective term for all colouring substances, especially for dyes and pigments. A preferred colourant is a pigment. A preferred pigment is an organic pigment. Pigments that are notable in connection with the invention are especially the pigments mentioned in DIN 55943:2001-10 and those mentioned in *"*Industrial Organic Pigments, Third Edition" (Willy Herbst, Klaus Hunger Copyright© 2004 WILEY-VCH Verlag GmbH & Co. KGaA, Weinheim ISBN: 3-527-30576-9). A pigment is a colourant that is preferably insoluble in the application medium. A dye is a colourant that is preferably soluble in the application medium.

### Adhesion promoter polymer/adhesion promoter layer

An adhesion promoter layer is a layer of the sheet-like composite that includes at least one adhesion promoter polymer in a sufficient amount such that the adhesion promoter layer improves adhesion between layers adjacent to the adhesion promoter layer. Accordingly, the adhesion promoter layers are preferably polymer layers. An adhesion promoter layer may be located between layers of the sheet-like composite which do not adjoin one another. Suitable adhesion promoter polymers in an adhesion promoter layer are all polymers which, by functionalisation by means of suitable functional groups, are suitable for producing a firm bond by forming ionic bonds or covalent bonds to a surface of a respective adjacent layer. A preferred adhesion promoter polymer is a functionalised polyolefin. A preferred functionalised polyolefin is an acrylic acid copolymer obtained by co-polymerisation of ethylene with an acrylic acid.

According to the invention, it is preferred that the adhesion between the carrier layer, a polymer layer or the barrier layer to the respective next layer is at least 0.5 N/15mm, preferably at least 0.7 N/15mm and particularly preferably at least 0.8 N/15mm. In one embodiment according to the invention, it is preferred that the adhesion between a polymer layer and a carrier layer is at least 0.3 N/15mm, preferably at least 0.5 N/15mm and particularly preferably at least 0.7 N/15mm. Furthermore, it is preferred that the adhesion between the barrier layer and a polymer layer is at least 0.8 N/15mm, preferably at least 1.0 N/15mm and particularly preferably at least 1.4 N/15mm. In the case that the barrier layer indirectly follows a polymer layer via an adhesion promoter layer, it is preferred that the adhesion between the barrier layer and the adhesion promoter layer is at least 1.8 N/15mm, preferably at least 2.2 N/15mm and particularly preferably at least 2.8 N/15mm. In an embodiment, the adhesion between the individual layers is so strong that the adhesion test results in a tearing of the carrier layer, in particular, in the case of cardboard as the carrier layer in a so-called cardboard fibre tear.

### Outer surface

The outer surface of the sheet-like composite is a surface of the sheet-like composite which is intended to be in contact with the environment of the container in a container to be produced from the sheet-like composite. This does not contradict with the outer surface in various regions of the composite being folded onto itself and joined to itself, for example sealed to itself, in individual regions of the container.

### Inner surface

The inner surface of the sheet-like composite is a surface of the sheet-like composite which is intended to be in contact with the contents of the container, preferably a food or drink product, in a container to be produced from the sheet-like composite.

### Crease line

In the context of the invention, a crease line, is a linear material modification intended to facilitate folding of the sheet-like composite or blank thereof along the crease line. In particular, the crease line is intended to allow a fold to be produced as precisely as possible along the crease line. Accordingly, a closed container can be formed from the sheet-like composite or a blank thereof, in each case having a corresponding crease line pattern consisting of multiple crease lines, by folding along the crease lines. The sheet-like composite may include multiple such crease line patterns, each of which is arranged and configured to form a respective container. Preferably, all the crease line patterns of the sheet-like composite are identical.

Along the crease line, the sheet-like composite preferably has a linear depression, preferably in the form of a material displacement, on one side, preferably the side of the outer surface. On the opposite side, preferably the side of the inner surface, the sheet-like composite preferably has a bulge along the crease line.

In addition to the aforementioned folding, the production of the closed container includes the joining of areas of the sheet-like composite that have been contacted by way of the folding. Creasing tools are used to introduce the crease lines into the sheet-like composite, a process known as creasing. A creasing tool in the context of the invention may be any tool suitable for creasing a sheet-like composite or a carrier layer. For creasing, the creasing tool preferably includes a linear elevation which has a shape of the linear depression. By contacting the sheet-like composite or carrier layer with the linear elevation, the linear depression can be introduced into the sheet-like composite or carrier layer. Thus, the creasing tool can also be referred to as a pressing tool. As a counterpart to the aforementioned positive tool, the creasing tool may also include a negative tool. The negative tool includes a linear recess, which may also be referred to as groove-shaped. The linear recess preferably has, in a direction of its linear extension, the shape of the linear elevation of the positive tool and is further configured to at least partially receive material of the sheet-like composite or carrier layer displaced by the positive tool during creasing.

### Extruding / extruder

In the context of the invention, every extruder known to the skilled person and which appears to him to be suitable for purposes of the invention comes into consideration. An extruder is a device for shaping a mass, preferably a polymer mass, by pressing through a shaping orifice. A preferred extruder is a screw extruder. A melt extrusion coating is an application of a mass by pressing a melt, forming the mass, through the shaping orifice of an extruder onto a substrate so that a planar layer of the mass superimposing the substrate is obtained. In the case of a polymer composition as a mass, the mass is preferably melted for extrusion coating. During extrusion, the polymers are typically heated to temperatures of 210 to 350 °C, measured at the molten polymer film below the exit at the extruder die. Extrusion can be carried out by means of commercially available extrusion tools known to the person skilled in the art, such as extruders, extruder screws, feedblocks, etc. At the end of the extruder there is preferably an orifice through which the polymer melt is pressed. The orifice can have any shape that allows the polymer melt to be extruded. For example, the orifice may be angular, oval or round. Preferably, the orifice has the shape of a slot of a funnel. After the melt layer has been applied to the substrate by means of the method described above, the melt layer is allowed to cool for the purpose of heat-setting, this cooling preferably being effected by quenching via contact with a surface maintained at a temperature in a range from 5 to 50 °C, more preferably in a range from 10 to 30 °C. Subsequently, at least the flanks are separated from the surface. The separation can be carried out in any way that is familiar to the skilled person and appears suitable in order to separate the flanks quickly, as accurately as possible and cleanly. Preferably, the separation is carried out by means of a knife, laser beam or water jet, or a combination of two or more of these, whereby the use of knives, in particular a pot knife, is particularly preferred.

### Laminating

Prefabricated films or layers may be joined to one another by laminating. In this case, the prefabricated layers or films are joined with the aid of one or more suitable laminating agents. A preferred laminating agent comprises, preferably consists of, a polymer composition from which a thermoplastic polymer layer, preferably the polymer layer C, or an adhesion promoter layer, preferably the polymer layer D, is obtainable.

### Joining

Any joining method which appears to the skilled person to be suitable for use according to the invention and by which a sufficiently strong connection can be obtained may be considered in the context of the invention. A preferred joining method is a material-to-material joining method. A material-to-material joint is understood herein to be a joint between joining partners which is produced by attractive forces between materials or within a material. A distinction must be made between this and, in particular, form-fitting and friction-fitting joints that are created by geometric shapes or frictional forces. A preferred material-to-material joining method may be one selected from the group consisting of a sealing, a welding, and a gluing, or a combination of at least two of them. In the cases of sealing and welding, the joint is created by means of a liquid and its solidification. In the case of gluing, chemical bonds are formed between the surfaces of the two objects to be joined, which create the joint. It is often advantageous in the case of sealing, welding or gluing to press the surfaces to be joined together. A preferred pressing of two layers is a pressing of a respective first surface of a first of the two layers onto a second surface of the second of the two layers facing the first surface over at least 20 %, preferably at least 30 %, more preferably at least 40 %, more preferably at least 50 %, more preferably at least 60 %, more preferably at least 70 %, still more preferably at least 80 %, still more preferably at least 90 %, most preferably at least 95 %, of the first surface. A particularly preferred joining is a sealing or welding. A preferred sealing or welding includes as steps a contacting, a heating and a pressing, wherein the steps are preferably performed in this sequence. Another sequence is also conceivable, in particular the sequence of heating, contacting and pressing.

### Food or drink product

In the context of the invention, the sheet-like composite and the container precursor are preferably designed for production of a food or drink product container, also referred to as foodstuff container. In addition, the closed container according to the invention is preferably a food or drink product container. Food and drink products, also referred to as foodstuff, include all kinds of food and drink known to those skilled in the art for human consumption and also animal feeds. Preferred food and drink products are liquid above 5 °C, for example milk products, soups, sauces, non-carbonated drinks.

### Container precursor

A container precursor is a preliminary stage of the container that is created during the production of a, preferably closed, container. In this case, the container precursor contains the sheet-like composite, preferably as a blank. The sheet-like composite can be unfolded or folded. Preferably, the container precursor consists of the blank. A preferred container precursor is cut to size and designed to produce a single, preferably closed, container. A preferred container precursor which is cut to size and designed to produce a single container is also referred to as a sleeve. Here the sleeve includes the sheet-like composite folded, preferably along at least 2 longitudinal folds, more preferably along 4 longitudinal folds. These longitudinal folds are preferably, but not necessarily, arranged and configured to form longitudinal fold edges of a closed container formed at least in part from the container precursor. Further, the sleeve includes a longitudinal seam along which a first longitudinal edge of the blank is joined to a further longitudinal edge. Here, the sleeve is open in a top region and a bottom region. A preferred container precursor is formed in one piece.

### Container

The closed container according to the invention may have a multitude of different forms, but preference is given to an essentially cuboidal structure. In addition, the full area of the container may be formed from the sheet-like composite, or it may have a two-part or multipart construction. In the case of a multipart construction, it is conceivable that, as well as the sheet-like composite, other materials are also used, for example plastic, which can be used especially in the top or base regions of the container. In this context, however, it is preferable that the container is formed from the sheet-like composite to an extent of at least 50%, especially preferably to an extent of at least 70% and further preferably to an extent of at least 90% of the area. In addition, the container may have a device for emptying the contents. This may be formed, for example, from a polymer or mixture of polymers and be attached on the outer face of the container. It is also conceivable that this device has been integrated into the container by *"direct injection moulding".* In a preferred configuration, the container according to the invention has at least one fold edge. Preferably, a number of fold edge of the container is in the range from 4 to 22, especially preferably from 7 to 12. Fold edges in the context of the present invention are understood to mean regions which arise in the folding of the sheet-like composite. Examples of fold edges include the longitudinal contact regions between two wall areas of the container, also referred to as longitudinal fold edges herein. In the container, the container walls are preferably the areas of the container framed by the fold edges. Preferably, the interior of a container according to the invention comprises a food or drink product. Preferably, the closed container does not comprise any lid or base, or either, that has not been formed in one piece with the sheet-like composite. A preferred closed container comprises a food or drink product. A preferred closed container is a food or drink product container or a dimensionally stable container or both.

### Edges

Herein, fold edges or folds are defined as the linear regions of the sheet-like composite which are formed by a folding of the sheet-like composite and at which in each case two, preferably flat, regions of the sheet-like composite adjoin each other. Fold edges are to be distinguished from cut edges. Herein, cut edges are the linear regions of the sheet-like composite which delimit the dimensions of the sheet-like composite laterally. The term *"cut edge"* herein does not necessarily mean that the sheet-like composite has actually been cut. The region of the sheet-like composite which runs along a cut edge and which forms the vicinity of the cut edge is referred to herein as edge. In regard of fold edges, cut edges and edges, the term *"longitudinal"* herein means that the respective fold edge, cut edge or edge essentially runs long the height of the container made from the sheet-like composite. In regard of fold edges, cut edges and edges, the term *"transversal"* means that the respective fold edge, cut edge or edge in the plane of the sheet-like composite runs essentially perpendicular to respective longitudinal fold edge, cut edge or edge.

### Through-hole

The through-hole in the carrier layer may have any shape that is known to a person skilled in the art and suitable for various closures or drinking straws. The through-holes often have rounded portions in plan view. Thus, the through-holes may be essentially circular, oval, elliptical or drop-shaped. The area of the through-hole in the carrier layer is the area over which the carrier layer is missing in plan view and which is laterally surrounded by the carrier layer. The area of a preferred through-hole is a full-surface area, preferably a circular area, an elliptical area or an oval area. A full-surface area is to be distinguished from a linear or loop-shaped area. The shape of the through-hole in the carrier layer usually also predetermines the shape of the opening that is produced either by an openable closure which is connected to the container and through which the content of the container is dispensed from the container after opening, or by a drinking straw in the container. Consequently, the openings of the opened container often have shapes that are comparable to or even the same as the at least one through-hole in the carrier layer. Configurations of the sheet-like composite with a single through-hole primarily serve for letting out the food or drink product located in the container that is produced from the sheet-like composite. A further through-hole may be provided, especially for letting air into the container while the food or drink product is being let out.

In the context of covering the through-hole of the carrier layer, it is preferred that the hole-covering layers are at least partly joined to one another, preferably to an extent of at least 30 %, preferably at least 70 % and especially preferably at least 90 %, of the area formed by the at least one hole. It is also preferred that the hole-covering layers are joined to one another at the edges of the through-hole and preferably lie against the edges joined to one another, in order in this way to achieve an improved leak-tightness over a join that extends across the entire area of the through-hole. The hole-covering layers are often joined to one another across the region that is formed by the at least one through-hole in the carrier layer. This leads to a good leak-tightness of the container formed from the composite, and consequently to a desired long shelf life of the food or drink products kept in the container.

### Opening/opening aid

The opening of the container is usually brought about by at least partially destroying the hole-covering layers that cover the through-hole. This destruction can be effected by cutting, pressing into the container or pulling out of the container. The destruction can be effected by means of an opening aid which is j oined to the container and is arranged in the region of the through-hole, usually above the through-hole, for example also by a drinking straw which is pushed through the hole-covering layers. It is also preferred in a configuration according to the invention that an opening aid is provided in the region of the at least one hole. It is preferred here that the opening aid is provided on the outer surface of the sheet-like composite. The container also preferably comprises a closure, for example a lid, on the outer surface. It is in this case preferred that the closure covers the through-hole at least partially, preferably completely. Consequently, the closure protects the hole-covering layers, which are less robust in comparison with the regions outside the through-hole, from damaging mechanical effects. For opening the hole-covering layers that cover the through-hole, the closure often comprises the opening aid. Suitable as such an opening aid are for example hooks for tearing out at least part of the hole-covering layers, edges or cutting edges for cutting into the hole-covering layers or spikes for puncturing the hole-covering layers, or a combination of at least two of these. These opening aids are often mechanically coupled to a screw lid or a cap of the closure, for example by way of a hinge, so that the opening aids act on the hole-covering layers to open the closed container when the screw lid or the cap is actuated. Closure systems of this kind, comprising composite layers covering a through-hole, openable closures that cover this through-hole and have opening aids, are sometimes referred to in the specialist literature as *"overcoated holes"* with *"applied fitments".*

### Method steps

The method steps of the methods according to the invention are carried out in the order of their symbols. In principle, method steps with immediately successive symbols can be carried out one after the other, at the same time or overlapping in time.

### TEST METHODS

The following test methods were used within the context of the invention. Unless stated otherwise, the measurements were conducted at an ambient temperature of 23 °C, an ambient air pressure of 100 kPa (0.986 atm) and a relative air humidity of 50 %.

### Separation of layers

If individual layers of a laminate or a partial laminate are/is to be examined separately herein, the layer(s) to be examined is/are first separated from the laminate as described below. Three specimens of the sheet-like composite are cut to size. For this purpose, unless stated otherwise, regions of the sheet-like composite without crease lines and folds are used. Unless stated otherwise, the specimens have dimensions of 4 cm × 4 cm. Should other dimensions of the layer to be examined be necessary for the examination to be conducted, sufficiently large specimens are cut out of the laminate. The layer to be examined is separated out of each of the preceding specimen. In order to release a joint between layers, the specimens are introduced into an acetic acid bath (30% acetic acid solution: 30% by weight of CH₃COOH, remainder to 100 % by weight H₂O) heated to 60 °C for 30 minutes. This detaches the layers from one another. If required, the layers may also be cautiously manually pulled apart. Should the desired layer not be sufficiently readily detachable, as an alternative, new specimens with the above dimensions are used and these are treated in an ethanol bath (99 % ethanol) as described above. If residues of the carrier layer (especially in the case of a cardboard layer as carrier layer) are present on the layer to be examined (for example the polymer layer A or the polymer layer C), these are cautiously removed with a brush. In any case, one sample of size sufficient for the examination to be conducted (unless stated otherwise, with an area of 4 cm²) is cut out of each of the three films of the layer to be examined that have been prepared as described above. These samples are then stored at 23 °C for 4 hours and hence dried. Subsequently, the three samples can be examined. Unless stated otherwise, the result of the examination is the arithmetic mean of the results for the three samples.

### Bending stiffness

The following devices are used to determine the bending stiffness of a sheet-like material, in particular a sheet-like composite or carrier layer:
- bending stiffness tester L&W Bending Tester Code 160, type 977682 from Lorentzen & Wettre, Sweden,
- punching machine for bending stiffness samples.

The material to be tested is climatised for 24 h in a standard climate (23 °C, 50 % relative humidity). The measurement is also carried out in a standard climate. Specimens with a width of 38.1 mm and a length of 69.85 mm are punched out of the material to be tested. In the case of roll material, the specimens are taken at 5 positions distributed over the width of the web. In any case, for each bending direction of the material to be tested, 2 specimens with their length in the corresponding bending direction of the material are punched out of the material at each specimen-taking position. Specimens may only be taken from areas of the material to be tested which neither have grooves nor folds.

Per bending direction to be considered, the bending stiffness (in mN) of the outer side and the opposite inner side is determined. For this purpose, the specimen is placed in the bending stiffness tester with the side to be measured facing forwards and the measurement is started by pressing the green button. For each combination of bending direction and material side (outer side or inner side), the same number of specimens is measured. A 2-point bending test is carried out by the bending stiffness measuring device. In this test, the specimen clamped at one end is deflected at its other end by a measuring edge through a bending angle of 15°. Here, a direction in which the material has the bending stiffness, i.e., the bending direction, is the direction of a straight line connecting the two points at which bending forces are exerted to the specimen in the 2-point bending test. In the case of the bending stiffness tester, this direction is the direction of the shortest straight line from the clamp to the measuring edge. In this direction, the specimen forms a curve during bending. Perpendicular to this direction, a straight fold line would form if the specimen were bent far enough for this. The free clamping length of the specimen is 50 mm. Each specimen may only be used for one measurement. Measurements of the outer side and the inner side on the same specimen are not permitted. The individual measured values are read from the display.

If multiple specimens were measured for each of the combinations of bending direction and material side, the arithmetic mean over the specimens is calculated for each of the combinations individually. The arithmetic mean values are then used as values for each of the combinations of bending direction and material side. The bending stiffness in a specific bending direction is the geometric mean over the values for the combinations of this bending direction/outer side and this bending direction/inner side.

### Oxygen transmission rate (OTR)

Oxygen transmission rate of a sheet-like composite or of a barrier layer or a combination of layers, including a barrier layer, is determined according to standard ASTM D3985-05 (2010). The sample to be tested, unless stated otherwise, is taken from a region of the laminate without crease lines or folds. In addition, the sample is tested with the side facing outward in the laminate facing the test gas. The area of the sample is 50 cm². The measurements are conducted at an ambient temperature of 23°C, an ambient air pressure of 100 kPa (0.986 atm) and a relative air humidity of 50%. The test instrument is an Ox-Tran 2/22 from Mocon, Neuwied, Germany. The measurement is conducted without compressed air compensation. For the measurements, samples at ambient temperature are used. Further, 0 % oxygen at the outer side of the sample and 100 % oxygen at the inner side are used for the measurement. Further settings and factors that affect the measurement - especially the rest of those listed under point 16 of the standard ASTM D3985-05 (2010) - are defined by the instrument used and the proper use and maintenance thereof according to the manufacturer's handbook.

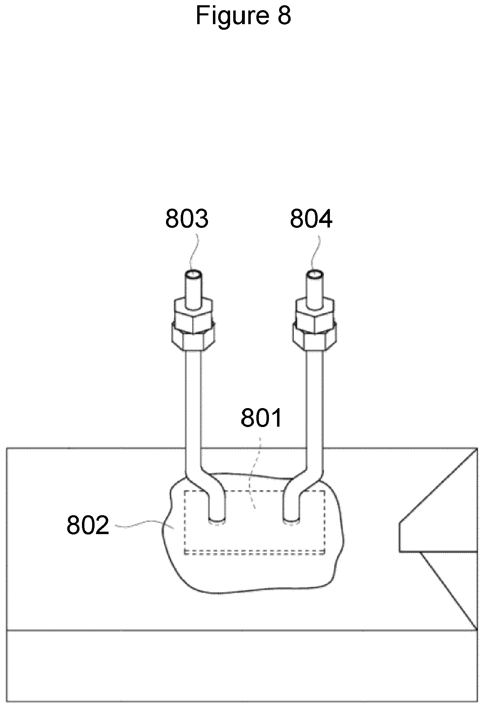

In order to determine the oxygen transmission rate of a container, a hole is cut into a side panel of the filled closed container. The dimensions of the hole are 10 mm × 40 mm. The container is emptied through the hole. Afterwards, a metal plate having tubes as gas inlet and gas outlet is put on the hole of the container such that the hole is fully covered by the plate. The gas inlet and the gas outlet extend through the hole into the interior of the container. In order to obtain a gas tight connection between plate and container, an epoxy resin, Devcon 5 Minute^{®} Epoxy by company ITW Engineered Polymers, is used as sealing compound. The resulting setup is shown in Figure 8. Further, the container is connected to the measurement device Ox-tran Model 2/21, Mocon, Neuwied, Germany via the tubes. The device is operated according to the software which comes along with the device. Measurement of the OTR is conducted with the Ox-tran Mode12/21 device (Mocon, Neuwied, Germany) and the according software. Therein, the measurement is in accordance with the standards ASTM D3985 (2010), DIN 53380-3 (1998-07), ASTM F-2622, ISO 14663-2 Annex C or ISO 15105-2 (2003-02). Measurement is conducted at 23 °C and 50 % relative air humidity for a duration of 24 h. Five containers which are identical in construction and which have been produced identically are prepared and studied as described above and the arithmetic mean is calculated and presented in volume of O₂ in ml / (package · year).

### Water vapour transmission rate (WVTR)

Water vapour transmission rate of a sheet-like composite or a barrier layer or a combination of layers, including a barrier layer, is determined according to standard ASTM F1249-13. The sample to be tested, unless stated otherwise, is taken from a region of the laminate without crease lines or folds. In addition, the sample is tested with its side facing inward in the laminate (the side facing the contents of the container) facing the elevated humidity. The measurement area of the sample is 50 cm². The measurements are conducted at an ambient temperature of 23°C, an ambient air pressure of 100 kPa (0.986 atm) and a relative air humidity of 85 % on the outer side of the sample and of 0 % on the inner side of the sample. The test instrument is a Permatran - W Model 3/33 from Mocon, Neuwied, Germany. For the measurements, samples at ambient temperature are used. Further settings and factors that affect the measurement - especially the rest of those listed under point 12 of the standard ASTM F1249-13 - are defined by the instrument used and the proper use and maintenance thereof according to the manufacturer's handbook.

### MFR value

The MFR value (mass-based melt flow rate in g/10 min) is measured in accordance with the standard DIN EN ISO 1133-1:2012-03 (unless otherwise stated at 190°C with 2.16 kg). Therein, method A as defined in the standard is used applying the standardised extrusion tool. The sample is conditioned in accordance with DIN EN ISO 1872-1. Sample mass and time interval for cutting off the extrudate are selected in accordance with table 4 on page 16 of DIN EN ISO 1133-1:2012-03. In accordance with the comment under the index c below the table 4, the mass is to be determined at an accuracy of 0.1 g.

### Density

Density is measured in accordance with the standard DIN EN ISO 1183-1:2012-04. Therein, method B (section 5.2 of the standard), applying a liquid pycnometer, is used. The sample to be studied is conditioned in accordance with DIN EN ISO 1872-1:199-10. Distilled water is used as the immersion liquid. The test temperature is 23 °C. No buoyancy correction is applied.

### Scott Bond value

The Scott Bond value is determined in accordance with Tappi 569.

### Melting temperature

Sample preparation for differential scanning calorimetry (DSC):
In case of a layer of a laminate, the material to be studied is separated from the other layers of the laminate as described above. A sample of at least 1.0 mg is weighed with a Kern 770 precision balance from Kern & Sohn GmbH, Balingen, Germany. For this purpose, the empty DSC pan is tared one the balance. Then the sample is weighed. Subsequently, the pan is closed with a lid on a press. The lid should have a small hole, so that the pan will not be deformed during DSC measurement. The sample and the crucible must not be deformed during the DSC measurement. Care must be taken not to touch the sample or the crucible by bare hand during sample preparation.

### Differential scanning calorimetry (DSC):

The melting temperature is determined in accordance with standard DIN EN ISO 11357-3:2011(E). As described therein by reference, the differential scanning calorimetry is conducted according to standard DIN EN ISO 11357-1, here version 11357-1:2010-03. The following details apply in addition to what is given in the standard or deviating from the standard. The calorimeter is a DSC 8000 from PerkinElmer Inc. In the DSC-method, the heat flow is measured as a function of the temperature. The graph of the measurement therefore shows the heat flow (dQ/dt) on the ordinate axis as a function of the temperature (T) on the abscissa axis. The endothermic direction is always upwards, as in note 2 to section 3.1 of DIN EN ISO 11357-1:2010-03. According to section 4.2 of standard DIN EN ISO 11357-1:2010-03, a heat flow differential calorimetry is carried out. In this case, the reference crucible is always empty and, according to section 3.10 of DIN EN ISO 11357-1:2010-03, the reference position is always used for the temperature. Nevertheless, a reference crucible must always be used. The flushing gas used (sections 5.5 and 9.1.2 of DIN EN ISO 11357-1:2010-03 is nitrogen. Prior to each measurement, the DSC instrument is calibrated according to sections 8.2 to 8.4 of DIN EN ISO 11357-1:2010-03 using the calibrating substances (section 3.2 and 5.4 of DIN EN ISO 11357-1:2010-03) indium and zinc (as per annex C of DIN EN ISO 11357-1:2010-03). As recommended in 8.4.2 of DIN EN ISO 11357-1:2010-03, the heat calibration is carried out using indium as calibrating substance. The crucible is fed to the calorimeter via the auto-sampler. Details about the sample are entered via the editor (name, weight, method of measurement, position on the auto sampler, memory location). The measurements are carried out in dynamic mode (3.9.5 of DIN EN ISO 11357-1:2010-03). In this case the sample is pre-treated by first heating from 35 °C to 300 °C at 20 °C/min and maintaining the temperature for 1 minute. Thereafter, the sample is cooled to 35 °C at 2 °C/min. After that, the measurement process is carried out with a heating rate of 20°C/min up to 300 °C.

### Evaluation:

For the evaluation of the measurement, only the second heating curve described above is used. The curve can be selected in the menu under "*curves*" and there "*heat flow*"*.* The selected curve is coloured in blue, the rest of the data is red and can be removed via "*remove curve*". Then, the melting temperature can be determined from the data via selecting "*peak area*" in the menu "*calc*". The peak is marked and then evaluated automatically. The sample has exactly as many melting temperatures as its second heating curve has endothermic peaks. If a sample has more than one peak, i.e., more than one melting temperature, the one of these at the lowest temperature is meant in case of any reference herein to a single melting temperature.

### Viscosity number of PA

The viscosity number of PA is measured according to the standard DIN EN ISO 307 (2013) in 95 % sulfuric acid.

### Residual moisture content of cardboard

The residual moisture content of the cardboard is measured according to the ISO 287:2009 standard.

### Adhesion

The adhesion of two adjacent layers is determined by fixing them in a 90° peel test instrument, for example the Instron "*German rotating wheel fixture*", on a rotatable roller which rotates at 40 mm/min during the measurement. The samples had been cut beforehand into strips 15 mm wide. On one side of the sample, the laminas are detached from one another and the detached end is clamped in a tensile device directed vertically upward. A measuring instrument to determine the tensile force is attached to the tensile device. As the roller rotates, the force needed to separate the laminas from one another is measured. This force corresponds to the adhesion of the layers to one another and is reported in N/15 mm. The separation of the individual layers can be effected mechanically, for example, or by means of a controlled pre-treatment, for example by soaking the sample in 30 % acetic acid at 60 °C for 3 min.

### Detection of colourants

Detection of organic colourants can be conducted in accordance with the methods described in "Industrial Organic Pigments, Third Edition" (Willy Herbst, Klaus Hunger Copyright© 2004 WILEY-VCH Verlag GmbH & Co. KGaA, Weinheim ISBN: 3-527-30576-9).

### Molecular weight distribution of polyolefins

To determine the molecular weight distribution of a polyolefin, such as a mPE, the high-temperature size exclusion chromatography (HT-SEC) is applied. For this purpose, the high-temperature chromatograph PL 220 from Polymer Laboratories (Agilent) is used. 2 mg of the material to studied is weighed and dissolved in 1,2,4-trichlorobenzene at 150 °C. The injection volume is 200 µL and the flow rate is 1 ml/min. The stationary phase are Plgel Olexis columns, Agilent, which are calibrated with narrowly distributed polystyrene standards from Polymer Standards Services, Germany. The control and evaluation of the measurements is carried out with the WinGPC unity software of the device manufacturer.

### Molecular structure of polyolefins

To determine the molecular structure of polyolefins, such as mPE, Nuclear Magnetic Resonance Spectroscopy (NMR Spectroscopy) is used. More specifically, ¹H-NMR spectra and ¹³C-NMR spectra are recorded with a NMR spectrometer from Varian (Agilent) at 400 MHz and 100.6 MHz, respectively. The solvent is CDCl₃ at 27 °C. Poorly soluble samples can be examined at 120 °C with C₂D₄Cl₂ as solvents. The NMR spectroscopy is, in particular, used to determine if an mPE comprises C₈-α-olefin-derived units or C₆-α-olefin-derived units.

### Layer thickness

The layer thickness of a sample having an area of 0.5 cm² is determined by means of a scanning electron microscope (SEM). For this purpose, a cross section through the layer structure to be determined is prepared manually with a blade (Leica Microtome Blades 819). The cross section is sputtered with gold (Cressington 108auto from Cressington Scientific Instruments Ltd., Wat-ford (UK)) and then analysed by SEM (Quanta 450, FEI Deutschland GmbH, Frankfurt) under high vacuum (pressure < 7.0·10⁻⁵ Pa). The layer thicknesses of the individual layers are ascertained with the *"xTMicroscope Control"* software, version 6.2.11.3381, FEI Company, Frankfurt, Germany. To determine the average thickness, three samples are taken, the layer thickness in each sample is determined as described above, and the arithmetic mean is formed.

### Basis weight (also referred to as "grammage") of partial sheet-like composite

Three samples with an area of at least 10 cm² each are cut from the laminate. The samples are taken from regions of the laminate without crease lines or folds. The exact areas of the samples are determined. For each sample, as far as possible all other layers are separated from the partial sheet-like composite (partial laminate), which consists of only the layers of the laminate that are on the inner side of the barrier layer, as described above (test method "*Separation of layers*").

If the barrier layer can be separated as described from the partial sheet-like composite, the three samples of the partial sheet-like composite are stored at 23 °C for 4 hours and hence dried. Each of the sample partial sheet-like composites is weighed at least to a precision of 1 mg. For each sample partial sheet-like composite, the weight is divided by the area to obtain the basis weight. The result is the arithmetic mean of the basis weights of the three sample partial sheet-like composites.

If the barrier layer cannot be separated from the partial sheet-like composite by the above test method *"Separation of layers",* there is a strong bond between a polymer sub-layer of the barrier layer and the outermost layer of the partial sheet-like composite. In this case, any barrier material layer, e.g., a layer of AlOx, SiOx or a metallisation layer, is removed from each of the three samples by acids, such as hydrochloric acid solution. After the barrier material layer has been removed, the three samples, which each consist of the polymer sub-layer of the barrier layer and the partial sheet-like composite, are stored at 23 °C for 4 hours and hence dried. Each of the samples is weighed at least to a precision of 1 mg. For each sample, the weight is divided by the area to obtain the basis weight. The basis weight of the combination of the polymer sub-layer of the barrier layer and the partial sheet-like composite is the arithmetic mean of the basis weights of the three samples. To determine the basis weight of the partial sheet-like composite, the basis weight of the polymer sub-layer of the barrier layer needs to be determined and subtracted.

For this purpose, a further sample having an area of 0.5 cm² is cut out of the laminate. The sample is taken from regions of the laminate without crease lines or folds. This sample is used to determine the number of layers and the thicknesses of the individual layers of the complete laminate structure, including sub-layers of the barrier layer, according to the above test method *"Layer thickness".*

Then a further sample of sufficient size is cut from the laminate. Again, the sample is taken from regions of the laminate without crease lines or folds. All other layers are removed from the outer side of the barrier layer (side remote from the partial sheet-like composite) as described above in the test method "*Separation of layers*". The thus-prepared structure, consisting of the barrier layer and the partial sheet-like composite is analysed according to the above test method "*Melting temperature*" (no further separation of layers). By comparison with literature data, the endothermic peaks in the second heating curve are used to determine the polymers included in the polymer sub-layer of the barrier layer and the partial sheet-like composite. For example, a peak at about 107 °C indicates LDPE and a peak at about 162 °C indicates PP.

Further, ATR infrared spectroscopy is used to determine which of the polymers identified in the DSC analysis forms the polymer sub-layer of the barrier layer. For this purpose, both sides of the structure (combination of polymer sub-layer of the barrier layer and partial sheet-like composite) are analysed with an FT-IR microscope - Thermo Scientific Nicolet^{™} iN^{™} 10 MX Infrared Imaging Microscope from Thermo Fisher Scientific Inc. An ATR spectrum of the sample to be analysed that covers the wave number range from 500 to 4000 cm⁻¹ with a resolution of 4 cm⁻¹ is recorded at 45° by means of a diamond as detector tip. Thus, ATR spectra of the inner side and the outer side of the structure are obtained. The vibration bands in these spectra are used to determine which of the polymers found in the DSC analysis forms the outer side of the structure, i.e., the polymer sub-layer of the barrier layer. For this purpose, the vibration bands can be analysed using the microscope software (Thermo Scientific^{™} OMNIC^{™} Series Software, Version 8.2 from Thermo Fisher Scientific Inc.).

Once the polymer which forms the polymer sub-layer of the barrier layer has been determined, the basis weight of this sub-layer is determined by multiplying its thickness (determined as described above) with the literature value of the density of the polymer. For example, a density of 0.9075 g/cm³ is used for PP, a density of 0.9235 g/cm³ is used for LDPE, a density of 0.905 g/cm³ is used for LLDPE and a density of 0.955 g/cm³ is used for HDPE. The basis weight of the polymer sub-layer of the barrier layer is subtracted from the basis weight of the combination of polymer sub-layer of the barrier layer and partial sheet-like composite to obtain the basis weight of only the partial sheet-like composite

### Transport simulation

Six identical closed and filled containers are placed in cardboard trays as used in commercial applications in 2 rows with 3 containers each. Four trays filled this way are stacked one upon the other to create a so-called column. The column is carefully wrapped with a shrink film to prevent the column from disintegrating during the transport simulation. Then the column is placed on a vibration table called "*Rüttelprüfstand*", type KF 458 05-09 from konzept GmbH, Hiittenstr. 31, Düren, Germany (year of production 2009). The column is shaken on the vibration table for 30 minutes using a rotational speed of 64 rpm (about 1 Hz), an amplitude of 20 mm and a vibration profile of the shape of 2 periods of a sinus curve. The vibration profile cycles per minute is about 60. After the transport simulation, only the containers from the lowest tray of the column are used to determine the liquid tightness of the container base and the OTR of the containers.

### Liquid tightness

Crystal oil 60 from Shell Chemicals with methylene blue is used as the test agent for testing the liquid tightness of the container base. For this test, 1,000 containers of each type of container to be tested are produced and filled with water as described below. Each of the 1,000 closed and filled containers is cut open along its circumference so as to obtain a first open cup-like container part including the sealed container base and a second open cup-like container part including the sealed top region of the container. The first container parts are first emptied and then filled with approximately 20 ml of the test agent each and then stored for 24 hours. After 24 hours, the outer side of the container base of each first container part is examined with the naked eye to see whether the test agent has produced a blue discolouration there. Such a discolouration clearly indicates a leak in the container base. Of course, a container base with a leak is regarded as not liquid-tight. The fewer non-liquid-tight containers out of 1,000 are observed, the better the liquid tightness of a container type.

### EXAMPLES

The invention is illustrated further by way of examples and figures. The invention is not restricted to the examples and figures.

### Laminate construction

For the Examples (according to the invention) and the Comparative Examples (not according to the invention), laminates with the layer constructions and layer sequences specified in Tables 1 to 6 below are each prepared.

### Laminate production

The laminates of the Examples and the Comparative Examples are produced with an extrusion coating system from Davis Standard. For application of the individual layers by melt extrusion, the polymers are melted in an extruder. The resultant melt is transferred via a feed block into a nozzle and extruded onto the substate. The extrusion temperature here is in the range from about 280 to 330 °C. In the first step, the carrier layer is provided with a circular through-hole of diameter 8 mm for each container to be produced from the laminate by die cutting and then the polymer layer A is applied directly to the carrier layer by melt extrusion coating. Thereby, the holes in the carrier layer are covered with the polymer layer A. In the second step, the barrier layer is laminated with the polymer layers C and D as laminating agents to the carrier layer that has been coated with the polymer layer A beforehand. The barrier layer, immediately prior to lamination, is subjected to surface treatment on both sides in order to increase the surface tension. The surface treatment is effected with an AVE-250E instrument from AFS Entwicklungs- und Vertriebs GmbH, Germany. The input power and the voltage of the surface treatment to be conducted in the form of a corona treatment are chosen so as to give a surface tension of the barrier layer on both sides of 55 dyne/cm (= 10⁻³ N/m) directly after the corona treatment. Subsequently, the inner polymer layers F, G and H are co-extruded onto the barrier layer with the basis weights specified in Table 7. The through-holes in the carrier layer are covered with the polymer layers A, C and D, the barrier layer and the inner polymer layers F, G and H.

**Table 1: Layer structure used for the laminates of the Comparative Examples A1 to A5**

| **Layer designation** | **Material** | **Basis weight [g/m²]** |
|---|---|---|
| Polymer layer A | LDPE 23L430 from Ineos GmbH, Cologne, Germany | 15 |
| Carrier layer | Liquid Packaging Board from Stora Enso Natura D CLC/L 260 mN | 272 |
| Polymer layer C | Blend of | 10 |
| | (1) 40 wt.-% of HDPE HD6070FA from Ineos GmbH, Cologne, Germany, and | |
| | (2) 60 wt.-% of LDPE 23L430 from Ineos GmbH, Cologne, Germany | |
| Polymer layer D | M21N430 from Ineos GmbH, Cologne, Germany | 3 |
| Barrier layer | Aluminium foil EN AW 8079 from Hydro Aluminium Deutschland GmbH | here: thickness 6 µm |
| Inner polymer layer F | Escor 6000 HSC from Exxon Mobil Corporation | see Table 7 |
| Inner polymer layer G | LDPE 19N430 from Ineos GmbH, Cologne, Germany | see Table 7 |
| Inner polymer layer H | Blend of | see Table 7 |
| | (1) 30 wt.-% of mLLDPE Eltex PF1315AZ from Ineos GmbH, Cologne, Germany, and | |
| | (2) 70 wt.-% of LDPE 19N430 from Ineos GmbH, Cologne, Germany | |

**Table 2: Layer structure used for the laminates of the Examples B1 to B4 and the Comparative Example B**

| **Layer designation** | **Material** | | **Basis weight [g/m²]** |
|---|---|---|---|
| Polymer layer A | LDPE 23L430 from Ineos GmbH, Cologne, Germany | | 15 |
| Carrier layer | Liquid Packaging Board from Stora Enso Natura D CLC/L 260 mN | | 272 |
| Polymer layer C | Blend of | | 10 |
| | (1) 40 wt.-% of HDPE HD6070FA from Ineos GmbH, Cologne, Germany, and | | |
| | (2) 60 wt.-% of LDPE 23L430 from Ineos GmbH, Cologne, Germany | | |
| Polymer layer D | M21N430 from Ineos GmbH, Cologne, Germany | | 2 |
| Barrier layer | Aluminium | MT5000 from Transparent Paper Ltd., Ziirich, Switzerland | |
| | BoPET | | |
| Inner Polymer layer F | Bynel 22E780 from DOW | | see Table 7 |
| Inner Polymer layer G | LDPE 19N430 from Ineos GmbH, Cologne, Germany | | see Table 7 |
| Inner polymer layer H | Blend of | | see Table 7 |
| | (1) 30 wt.-% of mLLDPE Eltex PF1315AZ from Ineos GmbH, Cologne, Germany, and | | |
| | (2) 70 wt.-% of LDPE 19N430 from Ineos GmbH, Cologne, Germany | | |

**Table 3: Layer structure used for the laminates of the Examples C1 to C4 and the Comparative Example C**

| **Layer designation** | **Material** | | **Basis weight [g/m²]** |
|---|---|---|---|
| Polymer layer A | LDPE 23L430 from Ineos GmbH, Cologne, Germany | | 15 |
| Carrier layer | Liquid Packaging Board from Stora Enso Natura D CLC/L 260 mN | | 272 |
| Polymer layer C | Blend of | | 10 |
| | (1) 40 wt.-% of HDPE HD6070FA from Ineos GmbH, Cologne, Germany, and | | |
| | (2) 60 wt.-% of LDPE 23L430 from Ineos GmbH, Cologne, Germany | | |
| Polymer layer D | Escor 6000 HSC from Exxon Mobil Corporation | | 2 |
| Barrier layer | AlOx | IB-PET-P2 from DNP Europe, Diisseldorf, Germany | |
| | BoPET | | |
| Inner Polymer layer F | Bynel 22E780 from DOW | | see Table 7 |
| Inner Polymer layer G | LDPE 19N430 from Ineos GmbH, Cologne, Germany | | see Table 7 |
| Inner polymer layer H | Blend of | | see Table 7 |
| | (1) 30 wt.-% of mLLDPE Eltex PF1315AZ from Ineos GmbH, Cologne, Germany, and | | |
| | (2) 70 wt.-% of LDPE 19N430 from Ineos GmbH, Cologne, Germany | | |

**Table 4: Layer structure used for the laminates of the Examples D1 to D4 and the Comparative**

| **Layer designation** | **Material** | | **Basis weight [g/m²]** |
|---|---|---|---|
| Polymer layer A | LDPE 23L430 from Ineos GmbH, Cologne, Germany | | 15 |
| Carrier layer | Liquid Packaging Board from Stora Enso Natura D CLC/L 260 mN | | 272 |
| Polymer layer C | Blend of | | 10 |
| | (1) 40 wt.-% of HDPE HD6070FA from Ineos GmbH, Cologne, Germany, and | | |
| | (2) 60 wt.-% of LDPE 23L430 from Ineos GmbH, Cologne, Germany | | |
| Polymer layer D | Bynel 21E4817 from DOW | | 3 |
| Barrier layer | Top coating | GL-AE ▪ C-FD from Toppan Printing Co. Ltd. | here: thickness 12 µm |
| | AlOx | | |
| | BoPET | | |
| Inner Polymer layer F | Bynel 21E4817 from DOW or Dow | | see Table 7 |
| Inner Polymer layer G | LDPE 19N430 from Ineos GmbH, Cologne, Germany | | see Table 7 |
| Inner polymer layer H | Blend of | | see Table 7 |
| | (1) 30 wt.-% of mLLDPE Eltex PF1315AZ from Ineos GmbH, Cologne, Germany, and | | |
| | (2) 70 wt.-% of LDPE 19N430 from Ineos GmbH, Cologne, Germany | | |

### Example D

**Table 5: Layer structure used for the laminates of the Examples E1 to E4 and the Comparative**

| **Layer designation** | **Material** | | **Basis weight [g/m²]** |
|---|---|---|---|
| Polymer layer A | LDPE 23L430 from Ineos GmbH, Cologne, Germany | | 15 |
| Carrier layer | Liquid Packaging Board from Stora Enso Natura D CLC/L 260 mN | | 272 |
| Polymer layer C | Blend of | | 10 |
| | (1) 40 wt.-% of HDPE HD6070FA from Ineos GmbH, Cologne, Germany, and | | |
| | (2) 60 wt.-% of LDPE 23L430 from Ineos GmbH, Cologne, Germany | | |
| Polymer layer D | Bynel 21E4817 from DOW | | 3 |
| Barrier layer | AlOx | Jindal Alox-lyte 16AO894 from Jindal films Europe S. a r. L. | here: thickness 16 µm |
| | BoPP | | |
| Inner Polymer layer F | blend of | | see Table 7 |
| | (1) 80 wt.-% of mLLDPE Eltex PF1315AZ from Ineos GmbH, Cologne, Germany, and | | |
| | (2) 20 wt.-% of LDPE 19N430 from Ineos GmbH, Cologne, Germany | | |
| Inner Polymer layer G | LDPE 19N430 from Ineos GmbH, Cologne, Germany | | see Table 7 |
| Inner polymer layer H | Blend of | | see Table 7 |
| | (1) 30 wt.-% of mLLDPE Eltex PF1315AZ from Ineos GmbH, Cologne, Germany, and | | |
| | (2) 70 wt.-% of LDPE 19N430 from Ineos GmbH, Cologne, Germany | | |

### Example E

**Table 6: Layer structure used for the laminates of the Examples F1 to F4 and the Comparative**

| **Layer designation** | **Material** | | **Basis weight [g/m²]** |
|---|---|---|---|
| Polymer layer A | LDPE 23L430 from Ineos GmbH, Cologne, Germany | | 15 |
| Carrier layer | Liquid Packaging Board from Stora Enso Natura D CLC/L 260 mN | | 272 |
| Polymer layer C | Blend of | | 10 |
| | (1) 40 wt.-% of HDPE HD6070FA from Ineos GmbH, Cologne, Germany, and | | |
| | (2) 60 wt.-% of LDPE 23L430 from Ineos GmbH, Cologne, Germany | | |
| Polymer layer D | Bynel 22E780 from DOW | | 2 |
| Barrier layer | SiOx | Ceramis from Amcor, Singen, Germany | |
| | BoPP | | |
| Inner Polymer layer F | Lotader 4613 from SK Chemicals | | see Table 7 |
| Inner Polymer layer G | LDPE 19N430 from Ineos GmbH, Cologne, Germany | | see Table 7 |
| Inner polymer layer H | Blend of | | see Table 7 |
| | (1) 30 wt.-% of mLLDPE Eltex PF1315AZ from Ineos GmbH, Cologne, Germany, and | | |
| | (2) 70 wt.-% of LDPE 19N430 from Ineos GmbH, Cologne, Germany | | |

### Example F

### Container production

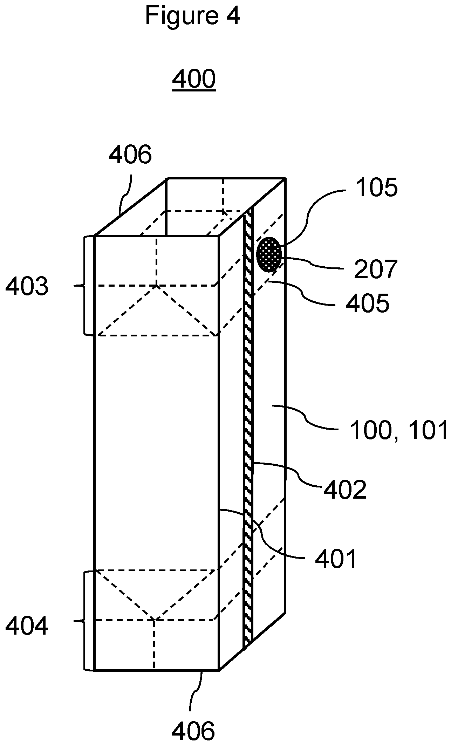

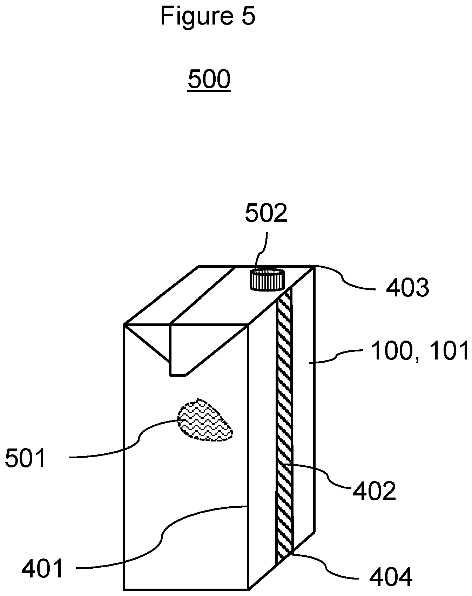

Crease lines, especially longitudinal crease lines, are introduced into the laminate obtained as described above so that grooves are on the outer side (side of the polymer layer A). In addition, the creased laminate is divided into multiple blanks for individual containers, each blank including one of the above holes in the carrier layer. By folding along the 4 longitudinal crease lines of each and every blank and heat sealing of overlapping fold faces, a sleeve-like container precursor of the shape shown in Figure 4 is obtained in each case. This sleeve is used to produce a closed container of the cuboid shape shown in Figure 5 in a CFA812 standard filling machine from SIG Combibloc, Linnich, Germany. This involves producing a container base by folding and closing by hot air sealing. This gives rise to a beaker that is open at the top. The beaker is sterilised with hydrogen peroxide. Then, the beaker is filled with water. By folding and ultrasound sealing, the top region of the beaker including the hole in the carrier layer is closed and hence a closed container is obtained.

### Measurements

The liquid tightness of the container base and the OTR of containers which have been prepared as described above are determined for each of the Examples and Comparative Examples as described above in the test methods section. In addition, closed and filled containers which have been prepared as described above are first subjected to the above-described transport simulation before determining the liquid tightness of the container base and the OTR. The impairment of the liquid tightness and OTR by the transport simulation is evaluated.

### Evaluation

In Table 7 "+++" means a more favourable result than "++", which is still more favourable than "+", which is in turn more favourable than "0", which is still more favourable than "-", which is still more favourable than "--", which is still more favourable than "---".

**Table 7: Basis weights of the inner polymer layers F to H and their effect on material consumption and impairment of liquid tightness of the container base and OTR of containers by mechanical stress as occurs in the transport simulation**

| | **Basis Weight of Inner Polymer Layers [g/m²]** | | | | **Low Impairment of Liquid Tightness of Container Base by Transport Simulation** | **Low Impairment of OTR of Containers by Transport Simulation** | **Low material Consumption** |
|---|---|---|---|---|---|---|---|
| | **F** | **G** | **H** | **Sum** | | | |
| Comparative Example A1 | 3 | 7 | 10 | 20 | --- | -- | +++ |
| Comparative Example A2 | 4 | 9 | 12 | 25 | -- | - | ++ |
| Comparative Example A3 | 5 | 10 | 14 | 29 | - | - | + |
| Comparative Example A4 | 5 | 12 | 15 | 32 | - | 0 | 0 |
| Comparative Example A5 | 5 | 13 | 15 | 33 | ++ | +++ | - |
| Example B1 | 3 | 7 | 10 | 20 | + | 0 | +++ |
| Example B2 | 4 | 9 | 12 | 25 | ++ | 0 | ++ |
| Example B3 | 5 | 10 | 14 | 29 | ++ | 0 | + |
| Example B4 | 5 | 12 | 15 | 32 | ++ | + | 0 |
| Comparative Example B | 5 | 13 | 15 | 33 | ++ | +++ | - |
| Example C1 | 3 | 7 | 10 | 20 | + | + | +++ |
| Example C2 | 4 | 9 | 12 | 25 | ++ | + | ++ |
| Example C3 | 5 | 10 | 14 | 29 | ++ | + | + |
| Example C4 | 5 | 12 | 15 | 32 | ++ | ++ | 0 |
| Comparative Example C | 5 | 13 | 15 | 33 | ++ | +++ | - |
| Example D1 | 3 | 7 | 10 | 20 | + | + | +++ |
| Example D2 | 4 | 9 | 12 | 25 | ++ | + | ++ |
| Example D3 | 5 | 10 | 14 | 29 | ++ | + | + |
| Example D4 | 5 | 12 | 15 | 32 | ++ | ++ | 0 |
| Comparative Example D | 5 | 13 | 15 | 33 | ++ | +++ | - |
| Example E1 | 3 | 7 | 10 | 20 | + | ++ | +++ |
| Example E2 | 4 | 9 | 12 | 25 | ++ | ++ | ++ |
| Example E3 | 5 | 10 | 14 | 29 | ++ | ++ | + |
| Example E4 | 5 | 12 | 15 | 32 | ++ | +++ | 0 |
| Comparative Example E | 5 | 13 | 15 | 33 | ++ | +++ | - |
| Example F1 | 3 | 7 | 10 | 20 | + | ++ | +++ |
| Example F2 | 4 | 9 | 12 | 25 | ++ | ++ | ++ |
| Example F3 | 5 | 10 | 14 | 29 | ++ | ++ | + |
| Example F4 | 5 | 12 | 15 | 32 | ++ | +++ | 0 |
| Comparative Example F | 5 | 13 | 15 | 33 | ++ | +++ | - |

The figures respectively show, in schematic form and not to scale, unless stated otherwise in the description or the respective figure:
- Figure 1: a schematic diagram of a sheet-like composite of the invention in cross section;
- Figure 2: a schematic diagram of a further sheet-like composite of the invention in cross section;
- Figure 3: a flow chart of a method according to the invention for producing a sheet-like composite;
- Figure 4: a schematic diagram of a container precursor of the invention;
- Figure 5: a schematic diagram of a closed container of the invention;
- Figure 6: a flow chart of a method according to the invention for producing a container precursor; and
- Figure 7: a flow chart of a method according to the invention for producing a closed container; and
- Figure 8: a schematic partial view of a closed container prepared for the above-described test method to determine the OTR of a container.

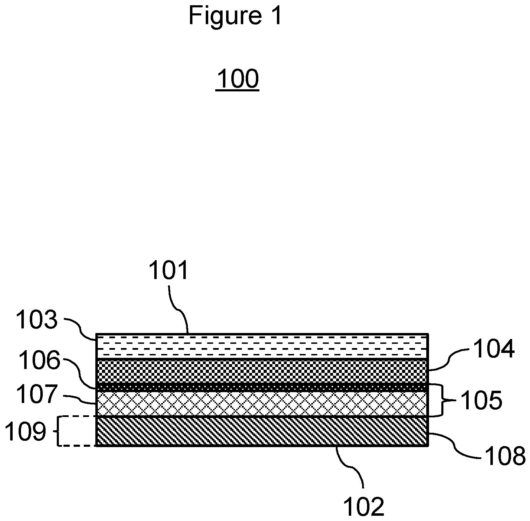

Figure 1 shows a schematic diagram of a sheet-like composite 100 of the invention in cross section. The sheet-like composite 100 comprises a layer sequence which comprises a carrier layer 103, a polymer layer C 104, a barrier layer 105 and an inner polymer layer H 108. The layers of the layer sequence are superimposed to one another in the preceding order from an outer surface 101 of the sheet-like composite 100 to an inner surface 102 of the sheet-like composite 100. The barrier layer 105 comprises a sublayer sequence which comprises as sublayers that are superimposed to one another a barrier material layer 106 and a barrier substrate layer 107 of a polymer. The barrier material layer 106 is superimposed to the barrier substrate layer 107 on a side of the barrier substrate layer 107 which faces the outer surface 101 of the sheet-like composite 100. An inner side of the barrier layer 105 faces towards the inner polymer layer H 108. A partial sheet-like composite 109 consists of only the layer of the sheet-like composite 100 which is superimposed to the barrier layer 105 on its inner side, i.e., the inner polymer layer H 108. A basis weight of the partial sheet-like composite 109 is less than 33 g/m². The carrier layer 103 has through-holes (not shown) which are covered by the barrier layer 105 as a first hole-covering layer the polymer layer C 104 as a further hole-covering layer.

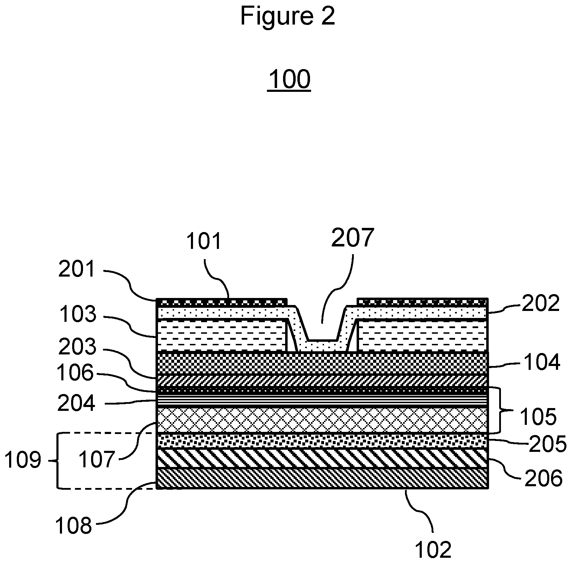

Figure 2 shows a schematic diagram of a further sheet-like composite 100 of the invention in cross section. The sheet-like composite 100 consists a layer sequence which comprises a colour application 201, obtained by intaglio printing, a polymer layer A 202 of a LDPE, a carrier layer 103 of cardboard, a polymer layer C 104, a polymer layer D 203 of an adhesion promoter polymer, a barrier layer 105, an inner polymer layer F 205, an inner polymer layer G 206 of a LDPE and an inner polymer layer H 108. The layers of the layer sequence are superimposed to one another in the preceding order from an outer surface 101 of the sheet-like composite 100 to an inner surface 102 of the sheet-like composite 100. The polymer layer C 104 consists of a polymer blend which consists of 40 wt.-% of a HDPE and 60 wt.-% of a LDPE, wherein the proportions in wt.-% are based on the total weight of the polymer layer C 104. The inner polymer layer F 205 consists of a polymer blend which consists of 80 wt.-% of a mPE and 20 wt.-% of a LDPE, wherein the proportions in wt.-% are based on the total weight of the inner polymer layer F 205. Alternatively, the inner polymer layer F 205 consists of a mPE. The inner polymer layer H 108 consists of a polymer blend which consists of 30 wt.-% of a mPE and 70 wt.-% of a LDPE, wherein the proportions in wt.-% are based on the total weight of the inner polymer layer H 108. The barrier layer 105 is a prefabricated film which comprises a sublayer sequence which comprises as sublayers that are superimposed to one another in a direction from the outer surface 101 of the sheet-like composite 100 to the inner surface 102 of the sheet-like composite 100 a barrier material layer 106 of an aluminium oxide and a barrier substrate layer 107 of a polyolefin. The carrier layer 103 has a through-hole 207 which is covered by the barrier layer 105 as a first hole-covering layer and, additionally, by each of the polymer layer A 202, the polymer layer C 104, the polymer layer D 203, the inner polymer layer F 205, the inner polymer layer G 206 and the inner polymer layer H 108 as a further hole-covering layers. In the through-hole 207, the polymer layer A 202 is sealed to the polymer layer C 104. An inner side of the barrier layer 105 faces towards the inner polymer layer H 108. A partial sheet-like composite 109 consists of only the layers of the sheet-like composite 100 which are superimposed to the barrier layer 105 on its inner side, i.e., the inner polymer layer F 205, the inner polymer layer G 206 and the inner polymer layer H 108. A basis weight of the partial sheet-like composite 109 is 20 g/m².

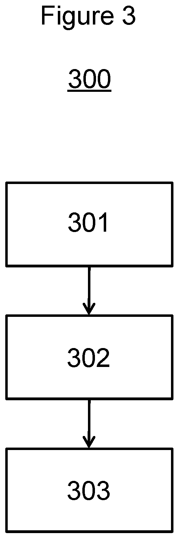

Figure 3 shows a flow chart of a method 300 according to the invention for producing the sheet-like composite 100 of Figure 1. This method 300 comprises a method step a) 301 of providing the carrier layer 103 and the barrier layer 105 as a roll-goods. The carrier layer 103 includes through-holes 207. In a method step b) 302, the barrier layer 105 is laminated to the to a first side of the carrier layer 103 using a polymer composite C as laminating agent. Here, the polymer composite C in the form of a polymer granulate is melted in an extruder and extrusion coated onto the carrier layer 103 which is then joined to the barrier layer 105 via the extrusion coated polymer melt, which, after solidification, forms the polymer layer C 104 of the sheet-like composite 100. In the method step b) 302, the through-holes 207 are covered by the barrier layer 105 as a first hole-covering layer and the polymer layer C 104 as a further hole-covering layer. In a method step c) 303, a polymer composition H, which is a further polymer granulate, is melt-extrusion coated to the barrier layer 105 on a side of the barrier layer 105 which faces away from the carrier layer 103 in a basis weight of less than 33 g/m². Thereby, the inner polymer layer H 108 is obtained from the polymer composition H.

Figure 4 shows a schematic diagram of a container precursor 400 of the invention. The container precursor 400 includes a blank of the sheetlike composite 100 of Figure 1 and obtained by the method 300 of Figure 3. The blank has been punched from the sheetlike composite 100, thereby creating longitudinal cut edges and transversal cut edges 406 which together delimit the lateral dimensions of the blank. The blank comprises one of the through-holes 207 in the carrier layer 103. Further, the blank has 4 longitudinal folds 401, each of which has been formed along a longitudinal crease line and forms a longitudinal fold edge 401. In the container precursor 400, the outer surface 101 of the sheetlike composite 100 faces outward. The container precursor 400 is in the form of a sleeve and comprises a longitudinal seam 402 in which a first longitudinal edge and a further longitudinal edge of the blank are sealed to one another. By folding along crease lines 405 and joining of fold regions in a top region 403 and a base region 404 of the container precursor 400, a closed container 500 is obtainable. Such a closed container 500 is shown in Figure 5.

Figure 5 shows a schematic diagram of a closed container 500 of the invention. The closed container 500 has been produced from the container precursor 400 according to Figure 4. The closed container 500 comprises a food or drink product 501 and has 12 fold edges. In addition, the closed container 500 is joined to a lid comprising an opening aid 502 which covers the through-hole 207 on the outer surface 101 of the sheetlike composite 100. Here, the lid 502 comprises a cutting tool as opening aid in its interior.

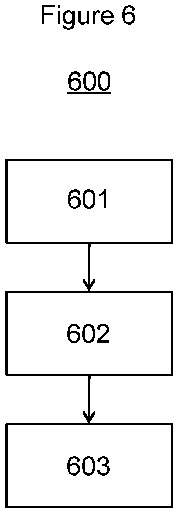

Figure 6 shows a flow chart of method 600 according to the invention for producing the container precursor 400 of Figure 4. In a method step A. 601, a blank of the sheetlike composite 100 of Figure 1 and obtained by the method 300 of Figure 3 is provided by punching. The blank comprises the through-hole 207 in the carrier layer 103, a first longitudinal edge and a further longitudinal edge. In a method step B. 602, the blank is folded along longitudinal crease lines. In a method step C. 603, the first longitudinal edge and the further longitudinal edge are pressed against one another and joined to one another by heat-sealing. Thus, a longitudinal seam 402 is obtained.

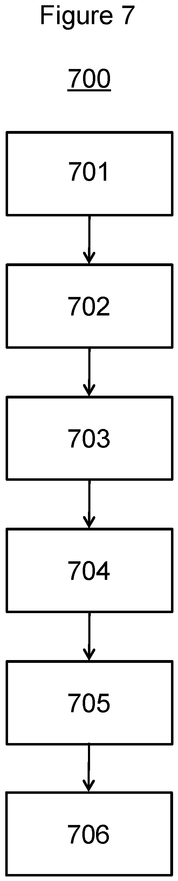

Figure 7 shows a flow chart of method 700 according to the invention for producing the closed container 500 of Figure 5. In a method step A] 701, the container precursor 400 according to Figure 4 is provided. In a method step B] 702, a base region 404 of the container precursor 400 is formed by folding the blank. In a method step C] 703, the base region 404 is closed by sealing with hot air at a temperature of 300 °C. In a method step D] 704, the container precursor 400 is filled with a food or drink product 501 and, in a method step E] 705, the container precursor 400 is closed by ultrasound sealing in a top region 403. In a method step F] 706, the opening aid 502 is joined to the closed container 500 by means a hot melt adhesive.

Figure 8 shows a schematic partial view of a closed container prepared for the above-described test method to determine the OTR of a container. The metal plate 801 having the gas inlet 803 and the gas outlet 804 can be seen. The metal plate 801 is glued to the container in a gas tight manner via the sealing compound 802. For measuring the OTR of the container, the measurement device is to be connected to the gas inlet 803 and the gas outlet 804.

### LIST OF REFERENCE SIGNS

- **100**: sheet-like composite according to the invention
- **101**: outer surface
- **102**: inner surface
- **103**: carrier layer
- **104**: polymer layer C
- **105**: barrier layer
- **106**: barrier material layer
- **107**: barrier substrate layer
- **108**: inner polymer layer H
- **109**: partial sheet-like composite
- **201**: colour application
- **202**: polymer layer A
- **203**: polymer layer D
- **204**: further polymer layer
- **205**: inner polymer layer F
- **206**: inner polymer layer G
- **207**: through-hole
- **300**: method according to the invention for producing a sheet-like composite
- **301**: method step a)
- **302**: method step b)
- **303**: method step c)
- **400**: container precursor according to the invention
- **401**: longitudinal fold/longitudinal fold edge
- **402**: longitudinal seam
- **403**: top region
- **404**: base region
- **405**: crease line
- **406**: transversal cut edge
- **500**: closed container according to the invention
- **501**: food or drink product
- **502**: lid with opening aid
- **600**: method according to the invention for producing a container precursor
- **601**: method step A.
- **602**: method step B.
- **603**: method step C.
- **700**: method according to the invention for producing a closed container
- **701**: method step A]
- **702**: method step B]
- **703**: method step C]
- **704**: method step D]
- **705**: method step E]
- **706**: method step F]
- **801**: metal plate
- **802**: sealing compound
- **803**: gas inlet
- **804**: gas outlet

## Claims

1. A sheet-like composite (100), comprising a layer sequence which comprises the following layers, superimposed to one another, in the following order from an outer surface (101) of the sheet-like composite (100) to an inner surface (102) of the sheet-like composite (100):
a. a carrier layer (103),
b. a barrier layer (105), and
c. an inner polymer layer H (108);
wherein the barrier layer (105) comprises a sublayer sequence which comprises
- a barrier material layer (106), and
- a barrier substrate layer (107)
as sublayers which are superimposed to one another;
wherein an inner side of the barrier layer (105) faces towards the inner polymer layer H (108);
wherein a partial sheet-like composite (109) consists of only the layers of the sheet-like composite (100) which are superimposed to the barrier layer (105) on its inner side; **characterised in that** a basis weight of the partial sheet-like composite (109) is less than 33 g/m².

2. The sheet-like composite (100) according to claim 1, wherein the inner polymer layer H (108) comprises, preferably consists of, a blend of a LDPE and a mPE.

3. The sheet-like composite (100) according to claim 1 or 2, wherein the layer sequence further comprises an inner polymer layer F (205) which is disposed between the barrier layer (105) and the inner polymer layer H (108),
wherein the inner polymer layer F (205) comprises a mPE.

4. The sheet-like composite (100) according to claim 3, wherein the inner polymer layer H (108) comprises its mPE in a first proportion based on the weight of the inner polymer layer H (108),
wherein the inner polymer layer F (205) comprises its mPE in a further proportion based on the weight of the inner polymer layer F (205),
wherein the first proportion is different from, preferably less than, the further proportion.

5. The sheet-like composite (100) according to claim 4, wherein the first proportion is not more than 50 wt.-%,
wherein the further proportion is more than 50 wt.-%.

6. The sheet-like composite (100) according to any of the preceding claims, wherein the layer sequence further comprises an inner polymer layer G (206) which is disposed between the barrier layer (105) and the inner polymer layer H (108), preferably between the inner polymer layer F (205) and the inner polymer layer H (108).

7. The sheet-like composite (100) according to any of the preceding claim, wherein the barrier substrate layer (107) comprises a polymer in a proportion of at least 50 wt.-%, based on the weight of the barrier substrate layer (107),
wherein the polymer of the barrier substrate layer (107) preferably is a polyolefin.

8. The sheet-like composite (100) according to any of the preceding claims, wherein the barrier material layer (106) comprises a barrier material in a proportion of at least 50 wt.-%, based on the weight of the barrier material layer (106),
wherein the barrier material:
- provides a barrier action, and
- is selected from the group consisting of an oxide, a metal, a silicon-containing compound and a polymer, or a combination of at least two of these.

9. The sheet-like composite (100) according to any of the preceding claims, wherein the barrier material layer (106) has an average thickness in a range from 1 nm to 1 µm.

10. The sheet-like composite (100) according to any of the preceding claims, wherein the barrier material layer (106) is superimposed to the barrier substrate layer (107) on a side of the barrier substrate layer (107) which faces the outer surface (101) of the sheet-like composite (100).

11. A method (300) for producing a sheet-like composite (100), the method (300) comprising as method steps:
a) providing a carrier layer (103) and a barrier layer (105);
b) superimposing the barrier layer (105) to a first side of the carrier layer (103); and
c) superimposing a polymer composition H to the barrier layer (105) on a side of the barrier layer (105) which faces away from the carrier layer (103), thereby obtaining an inner polymer layer H (108) from the polymer composition H;
wherein the barrier layer (105) comprises a sublayer sequence which comprises
- a barrier material layer (106), and
- a barrier substrate layer (107)
as sublayers which are superimposed to one another;
wherein in the sheet-like composite (100) an inner side of the barrier layer (105) faces towards the inner polymer layer H (108);
wherein a partial sheet-like composite (109) consists of only the layers of the sheet-like composite (100) which are superimposed to the barrier layer (105) on its inner side; **characterised in that** a basis weight of the partial sheet-like composite (109) is less than 33 g/m².

12. A container precursor (400) or a closed container (500), in each case comprising at least a sheet-like region of the sheet-like composite (100) according to any of the claims 1 to 10, or of a sheet-like composite (100) which is obtainable by the method (300) according to claim 11.

13. A method (600) comprising, as method steps:
A. providing at least a sheet-like region of the sheet-like composite (100) according to any of the claims 1 to 10, or of a sheet-like composite (100) which is obtainable by the method (300) according to claim 11, the at least sheet-like region comprising a first longitudinal edge and a further longitudinal edge;
B. folding the at least sheet-like region; and
C. contacting and joining the first longitudinal edge to the further longitudinal edge, thereby obtaining a longitudinal seam (402).

14. A method (700) comprising, as method steps:
A] providing the container precursor (400) according to claim 12, or a container precursor (400) which is obtainable by the method (600) according to claim 13;
**B]** forming a base region (404) of the container precursor (400) by folding the at least sheet-like region;
C] closing the base region (404);
**D]** filling the container precursor (400) with a food or drink product (501); and
**E]** closing the container precursor (400) in a top region (403), thereby obtaining a closed container (500).

15. A use of the sheet-like composite (100) according to any of the claims 1 to 10, or of a sheet-like composite (100) which is obtainable by the method (300) according to claim 11 for production of a food or drink product container.
